# EUROPEAN PATENT APPLICATION

(11) **EP 4 807 434 A1**
(43) Date of publication of application: **16.09.2026**
(21) Application number: 23958033.5
(22) Date of filing: 10.11.2023
(51) Int. Cl.: G02B 30/28

(54) **2D/MULTI-VIEW SWITCHABLE LENS DISPLAY, DISPLAY SYSTEM, AND METHOD**

(71) Applicant: Leia Inc., Menlo Park, CA (US); Leia Electronics (Suzhou) Co., Ltd., Suzhou, Jiangsu 215500 (CN)
(72) Inventor: ZHANG, Xiaojun, Suzhou, Jiangsu 215500 (CN); YANG, Ana, Suzhou, Jiangsu 215500 (CN); YUAN, Keyon, Suzhou, Jiangsu 215500 (CN)
(74) Representative: Carpmaels & Ransford LLP
(86) International application number: PCT/CN2023/130997
(87) International publication number: WO 2025/097428

(57) **Abstract**

The present disclosure provides a method of operating a 2D/multiview switchable lenticular display, comprising: providing pixels of a composite image including multiview image content and two-dimensional (2D) image content using an active self-emitting display panel, and inserting all-black pattern between the multiview image content and the 2D image content that are alternately displayed; and using a switchable lenticular lens array to form the composite image from the pixels, switchable lenticular lenses of the switchable lenticular lens array being switchable between an ON state to provide the multiview image content from corresponding pixels of the composite image and an OFF state to provide the 2D image content from corresponding pixels of the composite image, wherein a corresponding row of the switchable lenticular lens array is in the ON state when each row of the active self-emitting display panel is provided with the multiview image content, and a corresponding row of the switchable lenticular lens array is in the OFF state when each row of the active self-emitting display panel is provided with the 2D image content. The present disclosure also provides a 2D/multiview switchable lenticular display and a 2D/multiview switchable lenticular display system.

## Description

### TECHNICAL FIELD

The present disclosure relates to a field of displaying technology, and more particularly to a method of operating a 2D/multiview switchable lenticular display, a 2D/multiview switchable lenticular display, and a 2D/multiview switchable lenticular display system.

### BACKGROUND

Electronic displays are a nearly ubiquitous medium for communicating information to users of a wide variety of device and products. Among the most commonly found electronic displays are the cathode ray tube (CRT), plasma display panels (PDP), liquid crystal displays (LCD), electroluminescent displays (EL), organic light emitting diode (OLED) and active matrix OLEDs (AMOLED) displays, electrophoretic displays (EP) and various displays that employ electromechanical or electrofluidic light modulation (e.g., digital micromirror devices, electrowetting displays, etc.). In general, electronic displays may be categorized as either active displays (i.e., displays that emit light) or passive displays (i.e., displays that modulate light provided by another source). Among the most obvious examples of active displays are CRTs, PDPs and OLEDs/AMOLEDs. Active displays, while often exhibiting attractive performance characteristics including, but not limited to, high contrast and fast response speed, may find somewhat limited use in many practical applications given the principle of self-luminescence.

### SUMMARY

In order to achieve a hybrid display mode with optimum performance, such as alternately displaying two-dimensional (2D) content and three-dimensional (3D) content at a certain frequency, the present disclosure provides a method of operating a 2D/multiview switchable lenticular display, a 2D/multiview switchable lenticular display, and a 2D/multiview switchable lenticular display system.

According to a first aspect of the present disclosure, there is provided a method of operating a 2D/multiview switchable lenticular display, the method comprising:
providing pixels of a composite image using an active self-emitting display panel, the composite image comprising both multiview image content and two-dimensional (2D) image content, and inserting all-black pattern between the multiview image content and the 2D image content that are alternately displayed; and
using a switchable lenticular lens array to form the composite image from the pixels, switchable lenticular lenses of the switchable lenticular lens array being switchable between an ON state to provide the multiview image content from corresponding pixels of the composite image and an OFF state to provide the 2D image content from corresponding pixels of the composite image,
wherein a corresponding row of the switchable lenticular lens array is in the ON state when each row of the active self-emitting display panel is provided with the multiview image content, and a corresponding row of the switchable lenticular lens array is in the OFF state when each row of the active self-emitting display panel is provided with the 2D image content.

According to some embodiments of the present disclosure, the number of rows of the active self-emitting display panel is equal to the number of rows of the switchable lenticular lens array, and a gate scanning time of the active self-emitting display panel is equal to a gate scanning time of the switchable lenticular lens array.

According to some embodiments of the present disclosure, the method comprises:
synchronously scanning the switchable lenticular lens array line-by-line to switch to the ON state while the active self-emitting display panel is scanned line-by-line to refresh from providing the 2D image content to providing the all-black pattern; and
synchronously scanning the switchable lenticular lens array line-by-line to switch to the OFF state while the active self-emitting display panel is scanned line-by-line to refresh from providing the multiview image content to providing the all-black pattern.

According to some embodiments of the present disclosure, the method comprises: refreshing an image content of the corresponding row of the active self-emitting display panel from the all-black pattern to the multiview image content or the 2D image content when state switching is accomplished for each row of the switchable lenticular lens array.

According to some embodiments of the present disclosure, a maximum response time of the switchable lenticular lens array is less than or equal to a sum of a display time of the all-black pattern and twice of a LED response time of the active self-emitting display panel.

According to some embodiments of the present disclosure, a duration of the all-black pattern is equal to a duration of the 2D image content and a duration of the multiview image content.

According to some embodiments of the present disclosure, the duration of the all-black pattern is not equal to the duration of the 2D image content and the duration of the multiview image content.

According to some embodiments of the present disclosure, a duration of the all-black pattern is not equal to a duration of the 2D image content and a duration of the multiview image content.

According to some embodiments of the present disclosure, the method comprises:
reducing the duration of the all-black pattern by increasing a driving rate of the active self-emitting display panel and reducing a response time of the switchable lenticular lens array, such that the duration of the 2D image content and the duration of the multiview image content are increased to meet brightness requirements of the 2D/multiview switchable lenticular display.

According to some embodiments of the present disclosure, the method comprises:
increasing a driving rate of the active self-emitting display panel and reducing the duration of the 2D image content, such that a response time of the switchable lenticular lens array that switches from the OFF state to the ON state is less than or equal to a sum of a display time of the all-black pattern and twice of a LED response time of the active self-emitting display panel; and
increasing the driving rate of the active self-emitting display panel and reducing the duration of the multiview image content, such that the response time of the switchable lenticular lens array that switches from the ON state to the OFF state is less than or equal to the sum of the display time of the all-black pattern and twice of the LED response time of the active self-emitting display panel.

According to some embodiments of the present disclosure, the switchable lenticular lens array comprises:
a first material layer having a fixed refractive index and comprising fixed lenses of the switchable lenticular lens array;
a second material layer having an electrically controlled refractive index, the second material layer contacting the first material layer and filling in shapes of the fixed lenses of the switchable lenticular lens array; and
electrodes comprising an upper electrode and a lower electrode, the first material layer and the second material layer being disposed between the upper electrode and the lower electrode;
wherein switching a switchable lenticular lens of the switchable lenticular lens array to the ON state comprises applying a first electrical potential between the electrodes to make the second material layer in an electric field in a first direction, so as to control the electrically controlled refractive index of the second material layer to have a refractive index different from the fixed refractive index; and
wherein switching a switchable lenticular lens of the switchable lenticular lens array to the OFF state comprises removing the first electrical potential applied between the electrodes to remove the electric field in the first direction, so as to control the electrically controlled refractive index of the second material layer to have a refractive index that matches the fixed refractive index.

According to some embodiments of the present disclosure, switching the switchable lenticular lens of the switchable lenticular lens array to the OFF state comprises applying a second electrical potential between the electrodes to make the second material layer in an electric field in a second direction, so as to control the electrically controlled refractive index of the second material layer to have the refractive index that matches the fixed refractive index, wherein the first direction is orthogonal to the second direction.

According to some embodiments of the present disclosure, one of the upper electrode and the lower electrode covers an entire area of the switchable lenticular lens array, and the other of the upper electrode and the lower electrode comprises a first set of electrodes and a second set of electrodes interleaved across the entire area of the switchable lenticular lens array, wherein the second electrical potential is applied between the first set of electrodes and the second set of electrodes.

According to some embodiments of the present disclosure, the upper electrode and the lower electrode each comprises a first set of electrodes and a second set of electrodes interleaved across an entire area of the switchable lenticular lens array, wherein the second electrical potential is applied between the first set of electrodes and the second set of electrodes of the upper electrode and/or between the first set of electrodes and the second set of electrodes of the lower electrode.

According to some embodiments of the present disclosure, the first set of electrodes and the second set of electrodes each comprise strip electrodes that are spaced apart from one another, the strip electrodes of the first set of electrodes and the strip electrodes of the second set of electrodes interleaved with each other across the entire area of the switchable lenticular lens array.

According to some embodiments of the present disclosure, the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

According to some embodiments of the present disclosure, one of the first layer of electrodes and the second layer of electrodes that covers the entire area of the switchable lenticular lens array has a hollow pattern.

According to some embodiments of the present disclosure, the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

According to a second aspect of the present disclosure, a 2D/multiview switchable lenticular display is provided, comprising:
an active self-emitting display panel configured to provide pixels of a composite image comprising both multiview image content and two-dimensional (2D) image content, and to insert all-black pattern between the multiview image content and the 2D image content that are alternately displayed;
a switchable lenticular lens array configured to form the composite image from the pixels, wherein the switchable lenticular lens array having switchable lenticular lenses that switch between an ON state to provide the multiview image content from corresponding pixels of the composite image and an OFF state to provide the 2D image content from corresponding pixels of the composite image; and
a controller configured to control a corresponding row of the switchable lenticular lens array to be in the ON state when each row of the active self-emitting display panel is provided with the multiview image content, and to control a corresponding row of the switchable lenticular lens array to be in the OFF state when each row of the active self-emitting display panel is provided with the 2D image content.

According to some embodiments of the present disclosure, the number of rows from the active self-emitting display panel is equal to the number of rows of the switchable lenticular lens array, and a gate scanning time of the active self-emitting display panel is equal to a gate scanning time of the switchable lenticular lens array.

According to some embodiments of the present disclosure, the controller is configured to:
synchronously scan the switchable lenticular lens array line-by-line to switch to the ON state while the active self-emitting display panel is scanned line-by-line to refresh from providing the 2D image content to providing the all-black pattern; and
synchronously scan the switchable lenticular lens array line-by-line to switch to the OFF state while the active self-emitting display panel is scanned line-by-line to refresh from providing the multiview image content to providing the all-black pattern.

According to some embodiments of the present disclosure, the controller is configured to refresh an image content of the corresponding row of the active self-emitting display panel from the all-black pattern to the multiview image content or the 2D image content when state switching is accomplished for each row of the switchable lenticular lens array.

According to some embodiments of the present disclosure, a maximum response time of the switchable lenticular lens array is less than or equal to a sum of a display time of the all-black pattern and twice of a LED response time of the active self-emitting display panel.

According to some embodiments of the present disclosure, the controller is configured to make a duration of the all-black pattern is equal to a duration of the 2D image content and a duration of the multiview image content.

According to some embodiments of the present disclosure, the controller is configured to make a duration of the all-black pattern is not equal to a duration of the 2D image content and a duration of the multiview image content.

According to some embodiments of the present disclosure, the controller is configured to reduce the duration of the all-black pattern by increasing a driving rate of the active self-emitting display panel and reducing a response time of the switchable lenticular lens array, such that the duration of the 2D image content and the duration of the multiview image content are increased to meet brightness requirements of the 2D/multiview switchable lenticular display.

According to some embodiments of the present disclosure, the controller is configured to:
increase a driving rate of the active self-emitting display panel and reduce the duration of the 2D image content, such that a response time of the switchable lenticular lens array that switches from the OFF state to the ON state is less than or equal to a sum of a display time of the all-black pattern and twice of a LED response time of the active self-emitting display panel by; and
increase the driving rate of the active self-emitting display panel and reduce the duration of the multiview image content, such that the response time of the switchable lenticular lens array that switches from the ON state to the OFF state is less than or equal to the sum of the display time of the all-black pattern and twice of the LED response time of the active self-emitting display panel.

According to some embodiments of the present disclosure, the switchable lenticular lens array comprises:
a first material layer having a fixed refractive index and comprising fixed lenses of the switchable lenticular lens array;
a second material layer having an electrically controlled refractive index, the second material layer contacting the first material layer and filling in shapes of the fixed lenses of the switchable lenticular lens array;
electrodes configured to deliver a voltage or a current to switch the state of switchable lenticular lenses of the switchable lenticular lens array, wherein the electrodes include an upper electrode and a lower electrode, the first material layer and the second material layer being disposed between the upper electrode and the lower electrode; and
a lens controller configured to:
   apply a first electrical potential between the electrodes to make the second material layer in an electric field in a first direction, so as to control the electrically controlled refractive index of the second material layer to have a refractive index different from the fixed refractive index to provide the ON state; and
   remove the first electric potential applied between the electrodes to remove the electric field in the first direction, so as to control the electrically controlled refractive index of the second material layer to have a refractive index that matches the fixed refractive index to provide the OFF state.

According to some embodiments of the present disclosure, the lens controller is configured to apply a second electrical potential between the electrodes to make the second material layer in an electric field in a second direction, so as to control the electrically controlled refractive index of the second material layer to have the refractive index that matches the fixed refractive index to provide the OFF state, wherein the first direction is orthogonal to the second direction.

According to some embodiments of the present disclosure, one of the upper electrode and the lower electrode covers an entire area of the switchable lenticular lens array, and the other of the upper electrode and the lower electrode comprises a first set of electrodes and a second set of electrodes interleaved across an entire area of the switchable lenticular lens array, wherein the second electrical potential is applied between the first set of electrodes and the second set of electrodes.

According to some embodiments of the present disclosure, the upper electrode and the lower electrode each comprises a first set of electrodes and a second set of electrodes interleaved across an entire area of the switchable lenticular lens array, wherein the second electrical potential is applied between the first set of electrodes and the second set of electrodes of the upper electrode and/or between the first set of electrodes and the second set of electrodes of the lower electrode.

According to some embodiments of the present disclosure, the first set of electrodes and the second set of electrodes each comprise strip electrodes that are spaced apart from one another, the strip electrodes of the first set of electrodes and the strip electrodes of the second set of electrodes being interleaved with each other across the entire area of the switchable lenticular lens array.

According to some embodiments of the present disclosure, the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

According to some embodiments of the present disclosure, one of the first layer of electrodes and the second layer of electrodes that covers the entire area of the switchable lenticular lens array has a hollow pattern.

According to some embodiments of the present disclosure, the first set of electrodes and the second set of electrodes are arranged in the same layer, the electrodes in the first set of electrodes and the electrodes in the second set of electrodes are interleaved with each other, and a gap is provided between the electrodes in the first set of electrodes and adjacent electrodes in the second set of electrodes.

According to a third aspect of the present disclosure, a 2D/multiview switchable lenticular display system is provided, the system comprising:
a processor; and
a memory that stores instructions which, when executed by the processor, cause the processor to perform the method of the first aspect described above.

In the above aspects of the present disclosure, the overlapping of a 2D frame with a multiview frame, for example, displaying multiview content in a 2D mode, is avoided by inserting all-black pattern between the 2D image content and the multiview image content, and adjusting the gate scanning time and the gate scanning timing of the active self-emitting display panel, the maximum switching response time and the switching timing of the switchable lenticular lens array, to achieve good display performance of the full screen in the hybrid display mode.

### BRIEF DESCRIPTION OF THE DRAWINGS

Various features of examples and embodiments in accordance with the principles described herein may be more readily understood with reference to the following detailed description taken in conjunction with the accompanying drawings, where like reference numerals designate like structural elements, and in which:
FIG. 1A illustrates a perspective view of a multiview display in an example according to an embodiment consistent with the principles described herein.
FIG. 1B illustrates a graphical representation of the angular components of a light beam having a particular principal angular direction in an example, according to an embodiment consistent with the principles described herein.
FIG. 2 illustrates a side view of a 2D/multiview switchable lenticular display in an example, according to an embodiment consistent with the principles described herein.
FIG. 3 illustrates a block diagram of a 2D/multiview switchable lenticular system in an example, according to an embodiment consistent with the principles described herein.
FIG. 4A illustrates a schematic diagram of a switchable lenticular lens array in an OFF state, according to an example of an embodiment consistent with the principles described herein.
FIG. 4B illustrates a schematic diagram of a switchable lenticular lens array in an ON state in an example, according to an embodiment consistent with the principles described herein.
FIG. 5A illustrates a schematic diagram of a composite image perceived by a user in an example, according to an embodiment consistent with the principles described herein.
FIG. 5B illustrates a schematic diagram of an OLED display switching between a 2D mode and a multiview mode using a control manner of an LCD display.
FIG. 5C illustrates a schematic diagram of an example 2D/multiview switchable lenticular display switching between a 2D mode and a multiview mode, according to an embodiment consistent with the principles described herein.
FIG. 5D illustrates a schematic diagram of another example 2D/multiview switchable lenticular display switching between a 2D mode and a multiview mode, according to an embodiment consistent with the principles described herein.
FIG. 6A illustrates a cross sectional view of a switchable lenticular lens array in an OFF state in an example, according to another embodiment consistent with the principles described herein.
FIG. 6B illustrates a cross sectional view of a switchable lenticular lens array in an ON state in an example, according to another embodiment consistent with the principles described herein.
FIG. 6C illustrates a cross sectional view of a switchable lenticular lens array in an OFF state in another example, according to another embodiment consistent with the principles described herein.
FIG. 6D illustrates a cross-sectional view of a switchable lenticular lens array in an ON state in another example, according to another embodiment consistent with the principles described herein.
FIG. 7 shows a flowchart of a method of operating a 2D/multiview switchable lenticular display in an example, according to an embodiment consistent with the principles described herein.
FIG. 8 is a schematic block diagram that depicts an example illustration of a 2D/multiview switchable lenticular display system providing 2D/multiview display according to various embodiments.

Certain examples and embodiments may have other features that are one of in addition to and in lieu of the features illustrated in the above-referenced figures. These and other features are detailed below with reference to the above-referenced figures.

### DETAILED DESCRIPTION OF THE INVENTION

Examples and embodiments in accordance with the principles described herein provide a 2D/multiview switchable lenticular display with application to displaying two-dimensional (2D) images, multiview or three-dimensional (3D) images, and mixed-content 2D/multiview hybrid images, methods of operating a 2D/multiview switchable lenticular display, and a 2D/multiview switchable lenticular display system. In particular, according to the principles described herein, a lenticular display may employ a switchable medium surrounding the lenses in a lenticular array of a lenticular display. The switchable medium (e.g., birefringent liquid crystal medium) is used to effectively switch on and off various lenses of a lenticular array of the lenticular display. By switching on and off the various lenses, images having only 2D content, only multiview content or a combination or 2D/multiview mixed-content may be provided. According to various embodiments, a 2D/multiview switchable lenticular display comprises an active self-emitting display panel and a switchable lenticular lens array. The 2D/multiview switchable lenticular display may be operated in various modes including a 2D mode configured to provide a 2D image, a multiview mode configured to provide a multiview image, and a 2D/multiview hybrid mode configured to provide a 2D/3D hybrid image. In addition, the 2D/multiview hybrid mode may include one or both of zonal mixing and temporal mixing to provide the 2D/3D hybrid image, according to various embodiments.

According to various embodiments, the multiview mode of a 2D/multiview switchable lenticular display may provide a so-called "glasses-free" or autostereoscopic image, while the 2D mode may facilitate the presentation of 2D information or content at a relatively higher native resolution than that is available in the multiview mode, especially where the 2D information or content that does not include or benefit from a third dimension. As such, the composite image provided through time-multiplexing the 2D and multiview modes may provide both high resolution 2D content and somewhat lower resolution, multiview or 3D content simultaneously in the same image or on the same display. Uses of 2D/multiview switchable lenticular displays described herein include, but are not limited to, mobile phones (e.g., smartphones), watches, tablet computers, mobile computers (e.g., laptop computers), personal computers and computer monitors, automotive display consoles, camera displays, and various other mobile as well as substantially non-mobile display applications and devices.

Herein, a 'two-dimensional (2D) display' or equivalently a 2D mode of a multi-mode display is defined as a display or mode configured to provide a view of an image that is substantially the same regardless of a direction from which the image is viewed (i.e., within a predefined viewing angle or range of the 2D display or 2D mode). A traditional display found in many smart phones and computer displays is an example of 2D displays. In contrast, herein, a multiview mode of a 'multiview display' or equivalently a display mode of a multimode display is defined as an electronic display, display system, or display mode of a multimode display configured to provide different views of a multiview image in or from different view directions. In particular, the different views may represent different perspective views of a scene or object of the multiview image. In some instances, a multiview display or multiview mode may also be referred to as a three-dimensional (3D) display or 3D mode, e.g., when simultaneously viewing two different views of the multiview image provides a perception of viewing a three-dimensional image.

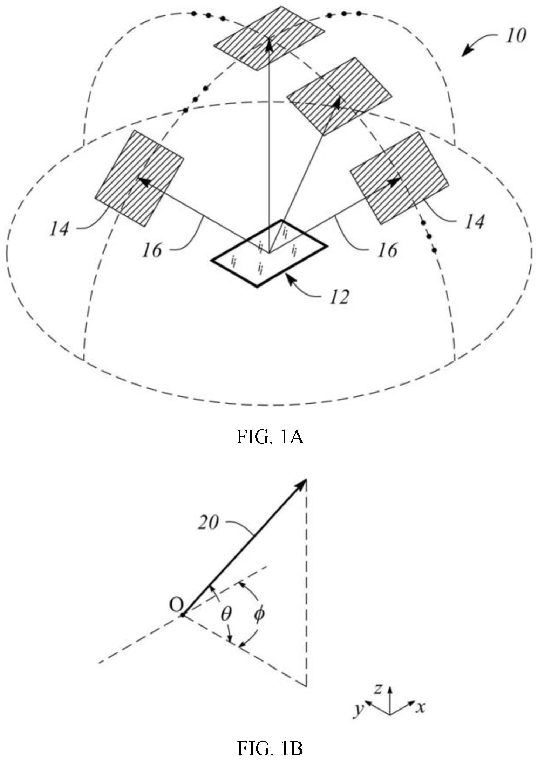

FIG. 1A illustrates a perspective view of a multiview display 10 (or a multiview mode of a multimode display) in an example, according to an embodiment consistent with the principles described herein. As illustrated in FIG. 1A, the multiview display 10 comprises a screen 12 to display a multiview image to be viewed. The multiview display 10 provides different views 14 of the multiview image in different view directions 16 relative to the screen 12. The view directions 16 are illustrated as arrows extending from the screen 12 in various different principal angular directions; the different views 14 are illustrated as shaded polygonal boxes at the termination of the arrows (i.e., depicting view directions 16); and only four views 14 and four view directions 16 are illustrated, all by way of example and not limitation. Note that while the different views 14 are illustrated in FIG. 1A as being above the screen, the views 14 actually appear on or in a vicinity of the screen 12 when the multiview image is displayed on the multiview display 10. Depicting the views 14 above the screen 12 is only for simplicity of illustration and is meant to represent viewing the multiview display 10 from a respective one of the view directions 16 corresponding to a particular view 14.

A view direction or equivalently a light beam having a direction corresponding to a view direction of a multiview display generally has a principal angular direction given by angular components {*θ*, *ϕ*}, by definition herein. The angular component *θ* is referred to herein as the 'elevation component' or 'elevation angle' of the light beam. The angular component *ϕ* is referred to as the 'azimuthal component' or 'azimuthal angle' of the light beam. By definition, the elevation angle *θ* is an angle in a vertical plane (e.g., perpendicular to a plane of the multiview display screen) while the azimuth angle *ϕ* is an angle in a horizontal plane (e.g., parallel to the multiview display screen plane).

Figure 1B illustrates a graphical representation of the angular components {*θ*, *ϕ*} of a light beam 20 having a particular principal angular direction or simply 'direction' corresponding to a view direction (e.g., view direction 16 in FIG. 1A) of a multiview display in an example, according to an embodiment consistent with the principles described herein. In addition, the light beam 20 is emitted or emanates from a particular point, by definition herein. That is, by definition, the light beam 20 has a central ray associated with a particular point of origin within the multiview display. FIG. 1B also illustrates the light beam (or view direction) point of the origin O.

Further herein, the term 'multiview' as used in the terms 'multiview image', 'multiview display' and 'multiview mode' is defined as a plurality of views representing different perspectives or including angular disparity between views of the plurality of views. In addition, herein the term 'multiview' explicitly includes more than two different views (i.e., a minimum of three views and generally more than three views), by definition herein. As such, 'multiview display' and 'multiview mode' as employed herein is explicitly distinguished from a stereoscopic display or stereoscopic mode that include only two different views to represent a scene or an image. Note however, while multiview images and multiview displays may include more than two views, by definition herein, multiview images may be viewed (e.g., on a multiview display) as a stereoscopic pair of images by selecting only two of the multiviews to view at a time (e.g., one view per eye).

A 'multiview pixel' is defined herein as a set of sub-pixels or 'view' pixels in each of a similar plurality of different views of a multiview display or of a multimode display during a multiview mode. In particular, a multiview pixel may have individual view pixels corresponding to or representing a view pixel in each of the different views of the multiview image. Moreover, the view pixels of the multiview pixel are so-called 'directional pixels' in that each of the view pixels is associated with a predetermined view direction of a corresponding one of the different views, by definition herein. Further, according to various examples and embodiments, the different view pixels of a multiview pixel may have equivalent or at least substantially similar locations or coordinates in each of the different views. For example, a first multiview pixel may have individual view pixels located at {*x*1, *y*1} in each of the different views of a multiview image, while a second multiview pixel may have individual view pixels located at {*x*2, *y*2} in each of the different views, and so on.

Herein a 'collimator' is defined as substantially any optical device or apparatus that is configured to collimate light. For example, a collimator may include, but is not limited to, a collimating mirror or reflector, a collimating lens, a diffraction grating, and various combinations thereof. In some embodiments, the collimator comprising a collimating reflector may have a reflecting surface characterized by a parabolic curve or shape. In another example, the collimating reflector may comprise a shaped parabolic reflector. By 'shaped parabolic' it is meant that a curved reflecting surface of the shaped parabolic reflector deviates from a 'true' parabolic curve in a manner determined to achieve a predetermined reflection characteristic (e.g., a degree of collimation). Similarly, a collimating lens may comprise a spherically shaped surface (e.g., a biconvex spherical lens).

In some embodiments, the collimator may be a continuous reflector or a continuous lens (i.e., a reflector or lens having a substantially smooth, continuous surface). In other embodiments, the collimating reflector or the collimating lens may comprise a substantially discontinuous surface such as, but not limited to, a Fresnel reflector or a Fresnel lens that provides light collimation. According to various embodiments, an amount of collimation provided by the collimator may vary in a predetermined degree or amount from one embodiment to another. Further, the collimator may be configured to provide collimation in one or both of two orthogonal directions (e.g., a vertical direction and a horizontal direction). That is, the collimator may include a shape in one or both of two orthogonal directions that provides light collimation, according to some embodiments.

Herein, a 'collimation factor' is defined as a degree to which light is collimated. In particular, a collimation factor defines an angular spread of light rays within a collimated beam of light, by definition herein. For example, a collimation factor s may specify that a majority of light rays in a beam of collimated light is within a particular angular spread (e.g., +/-σ degrees about a central or principal angular direction of the collimated light beam). The light rays of the collimated light beam may have a Gaussian distribution in terms of angle and the angular spread be an angle determined by at one-half of a peak intensity of the collimated light beam, according to some examples.

Herein, a 'multiview image' is defined as a plurality of images (i.e., greater than three images) wherein each image of the plurality represents a different view corresponding to a different view direction of the multiview image. As such, the multiview image is a collection of images (e.g., two-dimensional images) which, when display on a multiview display, may facilitate a perception of depth and thus appear to be an image of a 3D scene to a viewer, for example. A multiview image that provides pairs of views that represent different but related perspectives of a 3D scene consistent with viewing by a viewer is defined as a 3D image.

By definition, 'broad-angle' emitted light is defined as light having a cone angle that is greater than a cone angle of the view of a multiview image or multiview display. In particular, in some embodiments, the broad-angle emitted light may have a cone angle that is greater than about twenty degrees (e.g., > ± 20°). In other embodiments, the broad-angle emitted light cone angle may be greater than about thirty degrees (e.g., > ± 30°), or greater than about forty degrees (e.g., > ± 40°), or greater than fifty degrees (e.g., > ± 50°). For example, the cone angle of the broad-angle emitted light may be about sixty degrees (e.g., > ± 60°).

In some embodiments, the broad-angle emitted light cone angle may defined to be about the same as a viewing angle of an OLED computer monitor, an OLED tablet, an OLED television, or a similar digital display device meant for broad-angle viewing (e.g., about ± 40-65°). In other embodiments, broad-angle emitted light may also be characterized or described as diffuse light, substantially diffuse light, non-directional light (i.e., lacking any specific or defined directionality), or as light having a single or substantially uniform direction. -

In some embodiments, the wide-angle emitted light cone angle may be defined to be substantially the same as the viewing angle (e.g., about ± 4065 deg.) of an OLED computer monitor, an OLED flat panel, an OLED television, or a similar digital display device intended for wide-angle viewing. In other embodiments, the wide-angle emission light may also be characterized or described as diffuse light, substantially diffuse light, non-directional light (i.e., lacking any particular or defined directivity), or light having a single or substantially uniform direction.

Embodiments consistent with the principles described herein may be implemented using a variety of devices and circuits including, but not limited to, one or more of integrated circuits (ICs), very large scale integrated (VLSI) circuits, application specific integrated circuits (ASIC), field programmable gate arrays (FPGAs), digital signal processors (DSPs), graphical processor unit (GPU), and the like, firmware, software (such as a program module or a set of instructions), and a combination of two or more of the above. For example, an embodiment or elements thereof may be implemented as circuit elements within an ASIC or a VLSI circuit. Implementations that employ an ASIC or a VLSI circuit are examples of hardware-based circuit implementations.

In another example, an embodiment may be implemented as software using a computer programming language (e.g., C/C++) that is executed in an operating environment or a software-based modeling environment (e.g., MATLAB^{®}, MathWorks, Inc., Natick, MA) that is further executed by a computer (e.g., stored in memory and executed by a processor or a graphics processor of a general-purpose computer). Note that one or more computer programs or software may constitute a computer-program mechanism, and the programming language may be compiled or interpreted, e.g., configurable or configured (which may be used interchangeably in this discussion), to be executed by a processor or a graphics processor of a computer.

In yet another example, a block, a module or an element of an apparatus, device or system (e.g., image processor, camera, etc.) described herein may be implemented using actual or physical circuitry (e.g., as an IC or an ASIC), while another block, module or element may be implemented in software or firmware. In particular, according to the definitions herein, some embodiments may be implemented using a substantially hardware-based circuit approach or device (e.g., ICs, VLSI, ASIC, FPGA, DSP, firmware, etc.), while other embodiments may also be implemented as software or firmware using a computer processor or a graphics processor to execute the software, or as a combination of software or firmware and hardware-based circuitry, for example.

Further, as used herein, the article 'a' is intended to have its ordinary meaning in the patent arts, namely 'one or more'. For example, 'a lens' means one or more lenses and as such, 'the lens' means 'the lens or lenses' herein. Also, any reference herein to 'top', 'bottom', 'upper', 'lower', 'up', 'down', 'front', back', 'first', 'second', 'left' or 'right' is not intended to be a limitation herein. Herein, the term 'about' when applied to a value generally means within the tolerance range of the equipment used to produce the value, or may mean plus or minus 10%, or plus or minus 5%, or plus or minus 1%, unless otherwise expressly specified. Further, the term 'substantially' as used herein means a majority, or almost all, or all, or an amount within a range of about 51% to about 100%. Moreover, examples herein are intended to be illustrative only and are presented for discussion purposes and not by way of limitation.

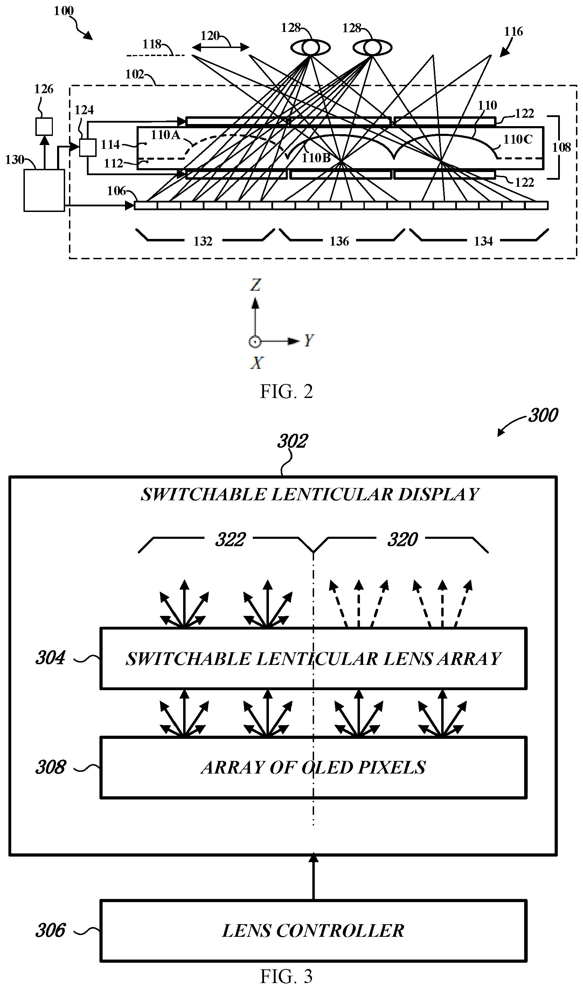

FIG. 2 illustrates a side view of a 2D/multiview switchable lenticular display 100 in an example, according to an embodiment consistent with the principles described herein. The 2D/multiview switchable lenticular display 100 comprises a display panel 102. In some embodiments, the display panel 102 may include an array of OLED pixels 106 configured to generate emitting lights in different angles to provide the pixels of an image, e.g., a composite image, described below. In other embodiments, other suitable configurations may also be used as the display panel 102, such as, but not limited to, plasma display panels (PDPs), electroluminescent (EL) displays, active matrix OLED (AMOLED) displays, active matrix Micro LEDs (AM Micro LEDs), active matrix LEDs (AMLED), or any other suitable active self-emitting displays.

In some embodiments, the array of OLED pixels 106 may be configured to emit light, such as white light, into a range of propagation angles. In some embodiments, the range of propagation angles may include a continuous range of propagation angles extending across a range of angular spanning an angular viewing range of the display panel 102.

According to various embodiments, the display panel 102 may be configured to provide pixels of a composite image. The composite image may include both multiview image content and two-dimensional (2D) image content, in various embodiments. Combining multiview image content and 2D image content on the same display panel 102 may allow the 2D image content to be presented with a higher resolution than the multiview image content. For example, for an embodiment of the display panel 102 that produces four views of the multiview image content, the resolution of the multiview image content may be a factor of four less than the resolution of the 2D image content. As a specific example, the composite image may include an image of a person and a caption that includes text. In this example, the multiview image content may include the image of the person, such that as a viewer moves in a field of view of the display panel 102, the viewer may observe various different views of the person. In this example, the 2D image content may include the caption with text, which may remain invariant (e.g., with only a single view) as the viewer moves in the field of view of the display panel 102. In the example presented above, the display panel 102 may present the caption with a higher resolution than the image of the person, which may improve readability of the caption text.

The 2D/multiview switchable lenticular display 100 illustrated in FIG. 2 further comprises switchable lenticular lens array 108. The switchable lenticular lens array 108 may be used to form the composite image from the pixels, according to various embodiments. As illustrated, the switchable lenticular lens array 108 may comprise switchable lenticular lenses 110A, 110B, 110C, referred to collectively herein as switchable lenticular lenses 110. The switchable lenticular lenses 110 are switchable between an ON state and an OFF state. In the ON state, the switchable lenticular lenses 110 are configured to provide the multiview image content from corresponding pixels of the composite image. In the OFF state, the switchable lenticular lenses 110 are configured to provide the 2D image content from corresponding pixels of the composite image. For example, in the OFF state, a switchable lenticular lens 110 may effectively become a transparent optical element that lacks or substantially lacks optical power. That is, the switchable lenticular lens 110 in the OFF state pass light without or with only minimal degree of optical effect. In a region or regions of the 2D/multiview switchable lenticular display 100 configured to display 2D image content, the switchable lenticular lenses 110 may be set in the OFF state and therefore may not affect propagation directions of light rays exiting the array of OLED pixels 106. As such, the pixels of the array of OLED pixels 106 in these regions may be viewable from a continuous range of view directions, i.e., in or as a 2D image within the region.

Alternatively, when the switchable lenticular lenses 110 are set to the ON state, the switchable lenticular lenses 110 have an optical power and are configured to affect the propagation direction of various light rays from the array of OLED pixels 106 that pass through and exit from the switchable lenticular lenses 110. In particular, in a region or regions of the 2D/multiview switchable lenticular display 100 in which the switchable lenticular lenses 110 are in the ON state, light rays from the array of OLED pixels 106 exit the switchable lenticular lenses 110 in directions corresponding to various view directions of a multiview image to provide multiview image content in this region or these regions.

According to some embodiments, the switchable lenticular lens array 108 may comprise a first material layer 112 having a fixed refractive index. The first material layer 112 may include fixed lenses of the switchable lenticular lens array 108. The switchable lenticular lens array 108 may include a second material layer 114 having an electrically controllable refractive index. For example, the second material 114 may comprise a birefringent liquid crystal having or exhibiting a first electrically controllable refractive index in a first controllable state and a second electrically controllable refractive index in a second controllable state. The first electrically controllable refractive index of the first controllable state may be configured to match or substantially match the fixed refractive index of the first material layer 112 and the second electrically controllable refractive index of the second controllable state may differ from the fixed refractive index of the first material layer 112, for example. In some embodiments, the second material layer 114 may contact the first material layer 112, such as along a boundary that is shaped with curved portions that may determine where the switchable lenticular lenses 110 are located in the switchable lenticular lens array 108. The second material layer 114 may fill in or substantially fill in shapes of the fixed lenses of the switchable lenticular lens array 108, e.g., as illustrated in FIG. 2. In some embodiments, the first material layer 112 may be disposed between the second material layer 114 and the array of OLED pixels 106. In these embodiments, a fixed lens of the first material layer 112 may be a positive lens. In other embodiments, the second material layer 114 may be disposed between the first material layer 112 and the array of OLED pixels 106. In some embodiments, a fixed lens of the first material layer 112 may be a negative lens. In the example of FIG. 2, the first material layer 112 is located between the array of OLED pixels 106 and the second material layer 114, by way of example and not limitation.

In other embodiments (not illustrated), the second material layer 114 may be illustrated between the array of light valves 106 and the first material layer 112. In the example of FIG. 2, a boundary between the first material layer 112 and the second material layer 114 is shaped to have a curved portion corresponding to each switchable lenticular lenses 110 in the switchable lenticular lens array 108. In the example of FIG. 2, the centers of the curved portions are a first distance away from the array of OLED pixels 106, the edges of the curved portions are a second distance away from the array of OLED pixels 106, and the second distance is less than the first distance. Alternatively, the second distance may be greater than the first distance. For all of these configurations, the curvature of the layer boundary and the refractive indices of the first material layer 112 and the second material layer 114 may be selected such that the switchable lenticular lenses 110 have a positive optical power.

In some embodiments, the switchable lenticular lens array 108 may comprise a one-dimensional (1D) array of cylindrical lenses arranged parallel to one another. The lenticular lens may be elongated in a vertical direction (such as along the X-direction in FIG. 2) and may direct light into a plurality of views 116 of the multiview image. The views 116 may be horizontally adjacent to one another (such as having adjacent locations along the Y-direction in FIG. 2). In some embodiments, the cylindrical lens in the ON state may have a focal length selected such that at a specified viewing plane 118, the view 116 may have a center-to-center spacing 120 that corresponds to an average interpupillary distance of a human. In some embodiments, the switchable lenticular lenses in the switchable lenticular lens array 108 may be semi-cylindrical lenses. In some embodiments, the switchable lenticular lenses in the switchable lenticular lens array 108 may be convex cylindrical lenses, concave cylindrical lenses, or lenses of any other suitable shapes.

In other embodiments, the switchable lenticular lens array 108 may comprise a two-dimensional array of lenses. In some embodiments, a switchable lenticular lens 110 in the switchable lenticular lens array 108 may be a rotationally symmetric lens, such as a lens that is symmetric about a longitudinal axis of the lens. In some embodiments, a switchable lenticular lens 110 in the switchable lenticular lens array 108 may be a rotationally asymmetric lens, such as an anamorphic lens. An anamorphic lens may have a first focal length along a first direction (such as along the X-direction in FIG. 2) and a second focal length along a second direction (such as along the Y-direction in FIG. 2) that is orthogonal to the first direction. In some embodiments, the switchable lenticular lenses in the switchable lenticular lens array 108 may be spherical lens elements or aspherical lens elements.

In some configurations, the switchable lenticular lens array 108 may include electrodes 122 configured to deliver at least one of a voltage or a current to switch switchable lenticular lenses 110 of the switchable lenticular lens array 108 independently of the other switchable lenticular lenses 110 of the switchable lenticular lens array 108. For example, the electrodes 122 may be configured to switch every switchable lenticular lens 110 independently of every other switchable lenticular lens. The electrodes 122 may include an upper electrode and a lower electrode configured to apply a voltage or deliver a current across a region of the second material layer 114. The region may correspond to a single switchable lenticular lens 110 or a group of switchable lenticular lenses 110. In some embodiments, the upper electrode or the lower electrode may extend over some or all of the second material layer 114, while the lower electrode or the upper electrode may extend over an area that corresponds to a single switchable lenticular lens. According to various embodiments, the electrodes 122 may be transparent or substantially transparent, e.g., the electrodes 122 may comprise indium tin oxide (ITO) or a similar optically transparent electrode material. In some embodiments, the switchable lenticular lens array 108 may include electrodes 122 configured to switch the switchable lenticular lenses 110 in a region of the switchable lenticular lens array 108 corresponding to a zone of the composite image independent of switchable lenticular lenses 110 in regions of the switchable lenticular lens array 108 corresponding to other zones of the composite image. For embodiments, the electrodes 122 may be configured to switch a group of switchable lenticular lenses 110, together, independently of other switchable lenticular lenses 110 in the switchable lenticular lens array 108. The electrodes 122 may include an upper electrode and a lower electrode configured to apply a voltage or deliver a current across a region of the second material layer 114. The region may correspond to a group of switchable lenticular lenses 110. In some embodiments, one of the electrodes 122 may extend over some or all of the second material layer 114, while an opposing electrode 122 may extend over an area that corresponds to multiple switchable lenticular lenses 110, such as in a specified zone of the composite image.

In some embodiments (e.g., as illustrated in FIG. 2), the 2D/multiview switchable lenticular display 100 further comprises a lens controller 124. The lens controller 124 may be configured to control the electrically controlled refractive index of the second material layer to have a refractive index that differs from the fixed refractive index to provide the ON state. The lens controller 124 may further control the electrically controlled refractive index of the second material layer 114 to have a refractive index that matches the fixed refractive index to provide the OFF state. For example, the lens controller 124 may selectively supply at least one of a voltage or a current to particular electrode pairs of the electrodes 122 which, in turn, are configured to distribute the at least one of the voltage or the current over suitable area(s) of the switchable lenticular lens array 108. For zonal switching, the lens controller 124 may switch the switchable lenticular lenses 110 of a zone of the composite image, together, between the ON state to provide the multiview image and the OFF state to provide the 2D image. In the example of FIG. 2, the lens controller 124 is part of the display panel 102. In other embodiments, the lens controller 124 may not be part of the display panel 102.

In some embodiments, the 2D/multiview switchable lenticular display 100 may further comprise a controller 130. In various embodiments, the controller 130 may be configured to provide a video image signal or a static image signal to the array of OLED pixels 106. The video image signal or a static image signal may include data that corresponds to a video image or a static image that may be displayed on the 2D/multiview switchable lenticular display 100. The controller 130 may be connected by a wireless or wired connection to receive the video image signal or the static image signal from a server or network. In some embodiments, the controller 130 may be configured to provide a separate video image signal or a separate static image signal for each view direction of the 2D/multiview switchable lenticular display 100. In some embodiments, the controller 130 may further control the lens controller 124. An optional eye tracker 126 may determine positions of eyes 128 of the user and may provide data representing the eye positions to the controller 130. In the example of FIG. 2, the controller 130 is not part of the display panel 102; in other configurations, the controller 130 may be part of the display panel 102.

According to various embodiments, the display panel 102 of the 2D/multiview switchable lenticular display 100 may be configured to provide the pixels of the composite image through temporal mixing or zonal mixing of pixels representing the multiview image content and the 2D image content within the composite image.

Temporal mixing may comprise time-multiplexing of the ON and OFF states of the switchable lenticular lenses 110 of the switchable lenticular lens array 108 to time-multiplex the multiview image content and 2D image content within the composite image. For example, for a particular region of the composite image, the display panel 102 may alternate in time between displaying multiview image content (and setting the switchable lenticular lens 110 to the ON state) and displaying 2D image content (and setting the switchable lenticular lens 110 to the OFF state). The alternating in time may occur every video frame, or at another suitable time-multiplexing rate. For time-multiplexing rates that are higher than a response rate of a human eye, the temporal mixing may be perceived as a 2D image superimposed on a multiview image. As a viewer moves in the field of view of the display panel 102, the multiview image may change from view to view, while the 2D image remains invariant. By way of example, the array of OLED pixels 106 may operate at 120 Hz, and the lens controller 124 may be configured to switch the switchable lenticular lens 110 between the ON state and the OFF state at 60 Hz, to provide time-multiplexing. In another example, the array of OLED pixels may operate at 240 Hz and the lens controller 124 may be configured to switch the switchable lenticular lens 110 between the ON state and the OFF state at 120 Hz.

Zonal mixing may comprise switching different subsets of the switchable lenticular lenses 110 in different regions of the switchable lenticular lens array corresponding to different zones of the composite image to the ON state to provide the multiview image content and to the OFF state to provide the 2D image content. For example, a first region of the display panel 102 may be configured to provide the multiview image content, and a second region of the display panel 102 may be configured to provide the 2D image content. In some embodiments, the multiview image content and the 2D image content may be provided simultaneously. As a viewer moves in the field of view of the display panel 102, the multiview image may change from view to view in the first region, while the 2D image remains invariant in the second region.

In an example of zonal mixing, the pixels of the composite image may be grouped into mutually exclusive subsets of pixels. Each subset of pixels may correspond to a respective switchable lenticular lens 110 of the switchable lenticular lens array 108. A switchable lenticular lens 110 of the switchable lenticular lens array 108 is configured to direct light from the corresponding subset of pixels into respective view directions of the multiview image as a view pixel of different views of the multiview image when the switchable lenticular lens 110 is in the ON state.

In the example of FIG. 2, the switchable lenticular lens array 108 includes three switchable lenticular lenses 110A, 110B, 110C. Each switchable lenticular lens 110A, 110B, 110C is associated with six OLED pixels 106 of the array of OLED pixels 106. The leftmost switchable lenticular lens 110A is associated with the leftmost grouping 132 of OLED pixels. The rightmost switchable lenticular lens 110C is associated with the rightmost grouping 134 of OLED pixels. The center switchable lenticular lens 110B is associated with the central group 136 of OLED pixels. Each of the three groups of OLED pixels corresponds to a respective zone of the composite image. FIG. 2 shows the leftmost switchable lenticular lens as being in the OFF state (as indicated by the dashed line), and the center and rightmost switchable lenticular lens in the ON state. As a result, the leftmost zone of the composite image is presented in 2D, while the center and rightmost zones of the composite image appear in multiview.

FIG. 3 illustrates a block diagram of a 2D/multiview switchable lenticular system 300 in an example, according to an embodiment consistent with the principles described herein. As illustrated, the 2D/multiview switchable lenticular system 300 comprises a switchable lenticular lens display 302 configured to provide a composite image comprising both multiview image content and two-dimensional (2D) image content. The switchable lenticular lens display 302 may include a switchable lenticular lens array 304 having switchable lenticular lenses that are switchable between an ON state and an OFF state. In some embodiments, the switchable lenticular lens array 304 may be substantially similar to the switchable lenticular lens array 108, described above.

The 2D/multiview switchable lenticular system 300 illustrated in FIG. 3 further comprises a lens controller 306. The lens controller 306 is configured to provide the composite image using either temporal mixing or zonal mixing of the multiview image content and 2D image content. Temporal mixing may include time-multiplexing an ON state and an OFF state of the switchable lenticular lenses of the switchable lenticular lens array 304 to superimpose the multiview image content and 2D image content within the composite image. The time-multiplexing may include a duty cycle that may optionally be controlled or varied to control or vary relative intensities of the multiview image content and 2D image content within the composite image. Zonal mixing may include selectively switching ON switchable lenticular lenses in a first zone 320 of the composite image to provide the multiview image content in the first zone 320 and selectively switching OFF switchable lenticular lens in a second zone 322 of the composite image to provide 2D image content in the second zone 322. In some embodiments, the lens controller 306 may be substantially similar to the lens controller 124, described above.

In some embodiments, the switchable lenticular lens array 304 may include a first material layer having a fixed refractive index. The first material layer may include fixed lenses of the switchable lenticular lens array 304. In some embodiments, the first material layer of the switchable lenticular lens array 304 may be substantially similar to the first material layer 112, described above.

The switchable lenticular lens array 304 may include a second material layer having an electrically controlled refractive index. The second material layer of the switchable lenticular lens array 304 may be in contact with the first material layer and fill in or substantially fill in shapes of the fixed lenses of the switchable lenticular lens array 304. The electrically controlled refractive index may have a first controllable state that matches the fixed refractive index of the first material layer and a second controllable state that differs from the fixed refractive index. In some embodiments, the second material layer of the switchable lenticular lens array 304 may be substantially similar to the second material layer 114, described above.

In some embodiments, the switchable lenticular lens array 304 may include electrodes configured to selectively deliver a current or a voltage to switch switchable lenticular lenses of the switchable lenticular lens array 304 independently of the other switchable lenticular lenses of the switchable lenticular lens array. In some embodiments, the electrodes may be substantially similar to the electrodes 122, described above.

In some embodiments, the switchable lenticular lens array 304 may include electrodes configured to selectively deliver a current or a voltage to switch the switchable lenticular lenses in a region of the switchable lenticular lens array 304 corresponding to a zone of the composite image independently of switchable lenticular lenses in regions of the switchable lenticular lens array 304 corresponding to other zones of the composite image. In some embodiments, the electrodes of the switchable lenticular lens array 304 may be substantially similar to the electrodes 122, described above.

In some embodiments, a switchable lenticular lens in the switchable lenticular lens array 304 may be a cylindrical lens. The cylindrical lens may be elongated in a vertical direction and is configured to direct light in directions corresponding to a plurality of views of the multiview image. The views may be horizontally adjacent to one another. In some embodiments, the cylindrical lens in the ON state may have a focal length selected such that at a specified viewing plane, the views may have a center-to-center spacing that corresponds to an average interpupillary distance of a human. In some embodiments (e.g., as illustrated in FIG. 3), the 2D/multiview switchable lenticular system 300 may optionally comprise an array of OLED pixels 310 that is substantially similar to the array of OLED pixels 106, as described above.

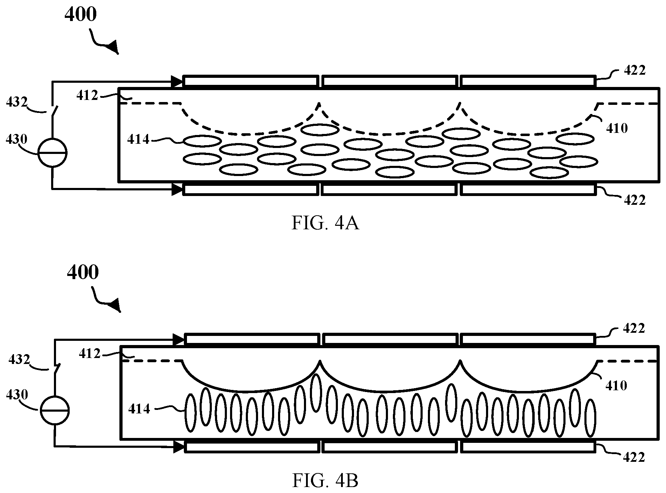

FIGS. 4A and 4B illustrate schematic diagrams of a switchable lenticular lens array 400 in an OFF state and in an ON state, respectively, in an example, according to an embodiment consistent with the principles described herein. As illustrated, the switchable lenticular lens array 400 comprises switchable lenticular lenses 410 that are switchable between the ON state and the OFF state (as indicated by the dashed line). In some embodiments, the switchable lenticular lens array 400 may be substantially similar to the switchable lenticular lens array 108, described above.

The switchable lenticular lens array 400 illustrated in FIGS. 4A and 4B further comprises a first material layer 412 having a fixed refractive index. The first material layer 412 may include fixed lenses of the switchable lenticular lens array 400. In some embodiments, the first material layer 412 of the switchable lenticular lens array 400 may be substantially similar to the first material layer 112, described above. The switchable lenticular lens array 400 may include a second material layer 414 having an electrically controlled refractive index. The second material layer 414 of the switchable lenticular lens array 400 may be in contact with the first material layer and fill in or substantially fill in shapes of the fixed lenses of the switchable lenticular lens array 400. The electrically controlled refractive index may have a first controllable state that matches the fixed refractive index of the first material layer 412 and a second controllable state that differs from the fixed refractive index. In some embodiments, the second material layer 414 of the switchable lenticular lens array 400 may be substantially similar to the second material layer 114, described above.

The switchable lenticular lens array 400 illustrated in FIGS. 4A and 4B further includes electrodes 422 configured to selectively deliver a current or a voltage to switch the switchable lenticular lenses 410 of the switchable lenticular lens array 400. In some embodiments, the electrodes 422 may be substantially similar to the electrodes 122, described above.

In the embodiment illustrated in FIGS. 4A and 4B, the switchable lenticular lens array 400 further includes a switch 432 and a power supply 430. In other embodiments, the switch 432 and the power supply 430 may not be included in the switchable lenticular lens array 400. In some embodiments, as shown in FIG. 4A, when the switch 432 is open, the current and voltage of the power supply 430 are not supplied to the electrodes 422, no electric field is applied to the second material layer 414, and the switchable lenticular lens array 400 is in the OFF state. In the OFF state, the long axis of material crystal of the second material layer 414 extends in a horizontal direction or a substantially horizontal direction such that the refractive index of the second material layer 414 matches the fixed refractive index of the first material layer 412, and thus the switchable lenticular lenses 410 pass light without or with only minimal degree of optical effect.

In some embodiments, as shown in FIG. 4B, when the switch 432 is closed, a current or a voltage from the power supply 430 is provided to the electrode 422, generating a vertically oriented electric field to apply to the second material layer 414, and the switchable lenticular lens array 400 is in the ON state. In the ON state, the long axis of material crystal of the second material layer 414 extends in a direction different from the horizontal direction such that the refractive index of the second material layer 414 is different from the fixed refractive index of the first material layer 412, and thus the switchable lenticular lenses 410 may affect the propagation direction of various light rays from the display panel that pass through and exit from the switchable lenticular lenses 410. By way of example only and not limitation, the long axes of the material crystals of the second material layer 414 in FIG. 4B all extend in a vertical direction to indicate that the crystals have a refractive index different from the fixed refractive index. It should be appreciated by those skilled in the art, the long axis directions of the material crystals of the second material layer 414 being different from the horizontal direction may indicate that the refractive index of the second material layer 414 differs from the fixed refractive index of the first material layer 412, and the long axis directions of the crystals of the second material layer 414 in the respective zoness may be adjusted to different directions according to various view directions such that the second material layer 414 has different refractive indices in the respective zones.

According to other embodiments of the principles described herein, a method of operating a 2D/multiview switchable lenticular display is provided. In particular, the method of operating a 2D/multiview switchable lenticular display may have at least two modes, i.e., a 2D mode and a multiview mode, which are time-multiplexed or time-interlaced. The 2D mode may display two-dimensional (2D) image content, while the multiview mode may display three-dimensional (3D) or multiview image content, according to various embodiments. Time-multiplexing combines the 2D image content with the 3D or multiview image content as a composite image having both 2D image and multiview image content or information.

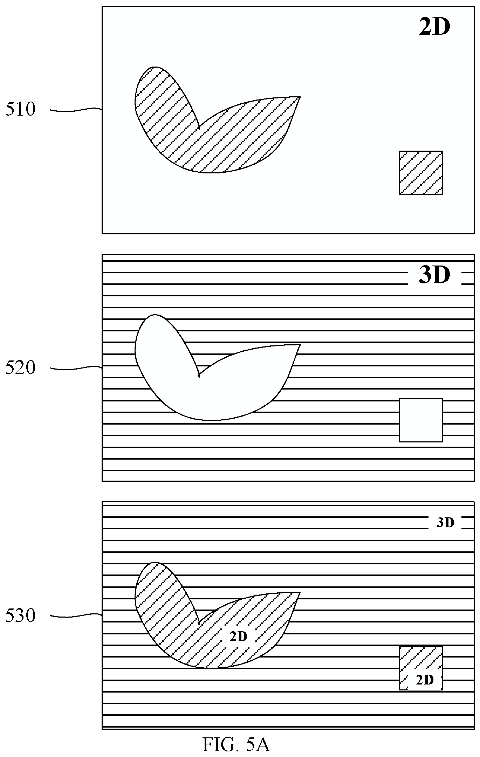

FIG. 5A illustrates a composite image perceived by a user in an example, according to an embodiment consistent with the principles described herein. According to some embodiments, as illustrated in FIG. 5A, the time-multiplexed display displays a 2D image 510 (indicated by diagonal shading) during a 2D mode and a 3D or multiview image 520 (indicated by horizontal shading) during a multiview mode. As described above, the 2D image 510 and the 3D or multiview image 520 are superimposed on the time-multiplexed display by time-multiplexing the 2D mode and the multiview mode to provide the composite image 530.

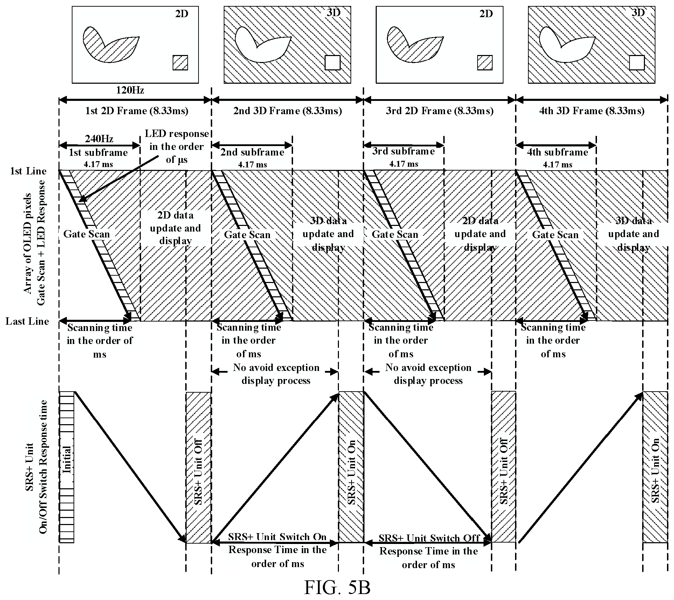

FIG. 5B illustrates a schematic diagram of an OLED display switching between a 2D mode and a multiview mode using a control manner of an LCD display. As illustrated in the top row of FIG. 5B, the first and third frames are expected to display 2D contents and the second and fourth frames are expected to display 3D or multiview contents, and so on. During the updating of image, the array of OLED pixels is gate scanned line-by-line according to the content to be displayed, to refresh the array of OLED pixels corresponding to a full screen, wherein a scanning time of the array of OLED pixels that performs gate scanning is in the order of milliseconds (ms). After receiving a gate scanning signal, the OLED pixels emit light under the effect of an electric field, wherein a response time of the OLED from receiving the gate scanning signal to emitting light is in the order of microseconds (µm), that is, the OLED pixels emit light to display content data immediately after receiving the scanning signal. On the other hand, a response time of the switchable lenticular lens array (e.g., an SRS+ unit) switching between the ON state and the OFF state is in the order of milliseconds (ms). Therefore, during the switching of the switchable lenticular lens array from the OFF state to the ON state and during the switching of the switchable lenticular lens array from the ON state to the OFF state, the OLED pixels in the array of OLED pixels emit light substantially all the time, resulting in 2D content and 3D or multiview content being always visible, and the switchable lenticular lens array cannot properly direct light from the array of OLED pixels, thereby failing to display correct image content on the switchable lenticular display. In other words, 2D content and 3D or multiview content will always overlap during gate scanning of the array of OLED pixels. Therefore, when an OLED display is controlled using the control manner of LCD display, exception display process cannot be avoided, and good 2D/multiview hybrid image cannot be achieved.

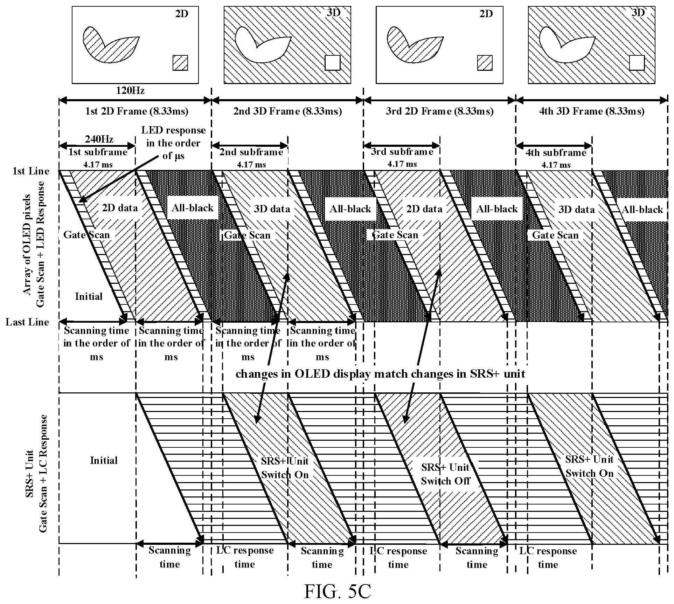

FIG. 5C illustrates a schematic diagram of an example 2D/multiview switchable lenticular display switching between a 2D mode and a multiview mode, according to an embodiment consistent with the principles described herein. In the example of FIG. 5C, the array of OLED pixels alternately displays 2D content and 3D content at 120 Hz, and the switchable lenticular lenses of the switchable lenticular lens array switch between an ON state and an OFF state at 60 Hz. For example, the frequency at which the composite image is provided is 60 Hz, and the frequency alternating between the first 2D frame and the second 3D frame is 120 Hz (i.e., the frame period is 8.33 ms). In the example of FIG. 5C, a subframe providing all-black data is inserted between a subframe providing 2D data and a subframe providing 3D data such that state switching of the SRS+ unit is accomplished during the subframe providing all-black data. As can be seen from FIG. 5C, when each row of the array of OLED pixels is provided with 3D data, the corresponding row of the SRS+ unit is in an 'ON' state, and when each row of the array of OLED pixels is provided with 2D data, the corresponding row of the SRS+ unit is in an 'OFF' state. Thus, changes in the image data provided by the array of OLED pixels match changes in the SRS+ unit, and the SRS+ unit may correctly direct light from the array of OLED pixels when 2D data and 3D data are provided by the array of OLED pixels.

In some embodiments, the number of rows of the array of OLED pixels may be equal to the number of rows of the SRS+ unit, and the gate scanning time of the array of OLED pixels may be equal to the gate scanning time of the SRS+ unit, so as to achieve optimal matching of changes in the image data with changes in the SRS+ unit. In other embodiments, the gate scanning time of the array of OLED pixels may not be equal to the gate scanning time of the SRS+ unit as long as the SRS+ unit can properly direct light from the array of OLED pixels, i.e., the SRS+ unit is in the ON state when 3D data is provided and the SRS+ unit is in the OFF state when 2D data is provided.

In the example of FIG. 5C, the SRS+ unit is synchronously scanned line-by-line to switch to the ON state while the array of OLED pixels is scanned line-by-line to refresh from providing 2D image content to providing all-black pattern; and the SRS+ unit is synchronously scanned line-by-line to switch to the OFF state while the array of OLED pixels is scanned line-by-line to refresh from providing multiview image content to providing all-black pattern. With such control, the LED response time and the subframe providing all-black pattern are fully utilized to accomplish the liquid crystal (LC) response of the SRS+ unit. In some embodiments, the image content of the corresponding row of the array of OLED pixels may be refreshed from the all-black pattern to multiview image content or 2D image content when state switching is accomplished for each row of the SRS+ unit. In some embodiments, each row of the array of OLED pixels may not immediately refresh from all-black pattern to multiview image content or 2D image content when state switching of the corresponding row of the SRS+ unit is accomplished.

In the example of FIG. 5C, the duration of the all-black pattern, the duration of the 2D image content and the duration of the multiview image content are all 4.17 ms. Such control is simpler, however, in further embodiments, the array of OLED pixels may be controlled such that the duration of the all-black pattern is not equal to the duration of the 2D image content and the duration of the multiview image content.

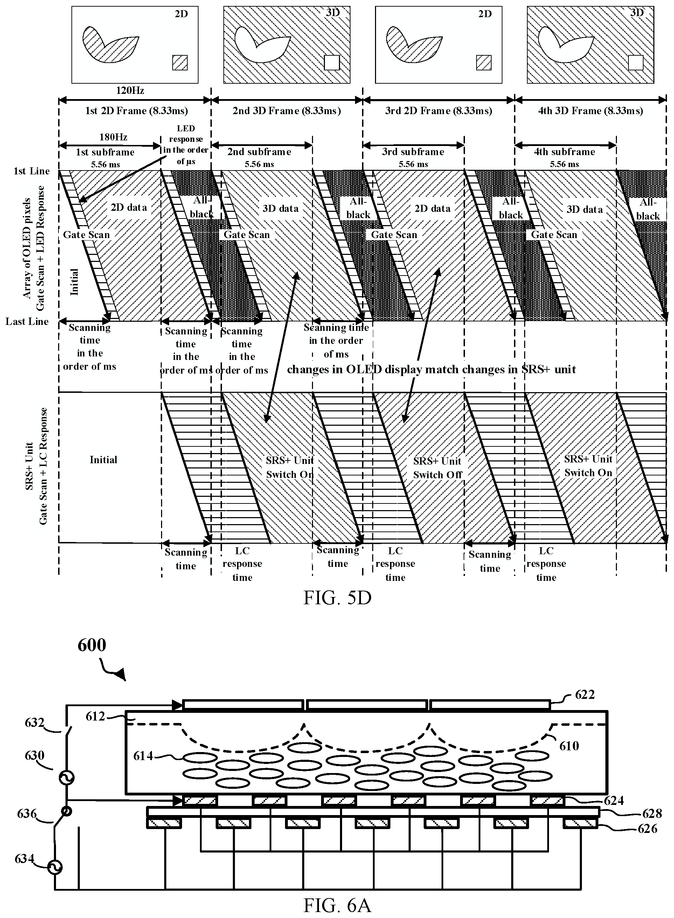

For example, FIG. 5D illustrates a schematic diagram of another example 2D/multiview switchable lenticular display switching between a 2D mode and a multiview mode, according to an embodiment consistent with the principles described herein. As shown in FIG. 5D, compared with the example of FIG. 5C, the driving rate of the active self-emitting display panel is increased (i.e., the gate scanning time of the array of OLED pixels is reduced) and the maximum switching response time T_{SRS_MAX} of the SRS+ unit is reduced (i.e., the duration of the all-black pattern of the array of OLED pixels is reduced), such that the duration of the 2D image content and the duration of the 3D image content are increased to increase the lighting time of the 2D/multiview switchable lenticular display, thereby meeting the minimum brightness requirements of the 2D/multiview switchable lenticular display. In the example of FIG. 5D, the frame period of the subframe that the array of OLED pixels provide 2D data/3D data is 5.56 ms; however, in other examples, the frame period of the subframe that the array of OLED pixels provide 2D data/3D data may be other suitable values.

Those skilled in the art would be appreciate that although FIGS. 5C and 5D illustrate embodiments in which the array of OLED pixels (and therefore the display panel) is refreshed at 120 Hz and the SRS+ unit is switched between the ON state and the OFF state at 60 Hz in non-limiting manner, in other embodiments the array of OLED pixels may have other refresh frequencies and the SRS+ unit may be switched between the ON state and the OFF state at half of the refresh frequency. In some examples, the array of OLED pixels may operate at 180 Hz, and the SRS+ unit may be switched between the ON state and the OFF state at 90 Hz.

The 2D/multiview switchable lenticular display on one hand has brightness requirements, on the other hand is limited by the maximum switching response time T_{SRS_MAX} of the SRS+ unit in order to correctly display hybrid image content. In some embodiments, the lighting time of the 2D/multiview switchable lenticular display may be increased and the subframe providing an all-black image that is available to the SRS+ unit for switching response may be prolonged by reducing the refresh frequency that the array of OLED pixels alternates between the 2D image and the multiview image such that the frame period T is prolonged. It should be noted that the refresh frequency that the array of OLED pixels alternates between the 2D image and the multiview image needs to at least exceed the visual persistence of a viewer using the display, such that each of the 2D image content and the multiview image content will appear to the user as being constantly present and without perceivable flicker in the composite image. For each of the 2D mode and the multiview mode, a switching rate of at least about 60 Hz (i.e., a refresh frequency of about 120 Hz) would provide this visual persistence goal (i.e., about or less than 1 millisecond in each mode).

Although FIG. 5D shows an example of shortening the subframe of the all-black pattern of the array of OLED pixels relative to the example of FIG. 5C while maintaining the frame period T, in some embodiments (not shown), the duration of the 2D image content and the duration of the 3D image content may be shortened while the lighting time of the 2D/multiview switchable lenticular display meets the requirements to provide sufficient time to accomplish the switching response of the SRS+ unit.

In some embodiments, an OLED with a higher peak current can be selected, thereby reducing a minimum lighting time required for the array of OLED pixels. In other embodiments, the minimum brightness requirement of the display panel can be reduced by providing a brightness enhancement film and/or a dual brightness enhancement film, thereby reducing the minimum lighting time required for the array of OLED pixels.

As shown in FIGS. 5C and 5D, in order to display the correct image content, the following equation (1) applies among the maximum switching response time T_{SRS_MAX} of the SRS+ unit, a display time T_{BLK} of the all-black pattern of the array of OLED pixels, and the OLED response time T_{OLED_RESP} of the array of OLED pixels: ${T}_{SRS _ MAX} ≦ {T}_{BLK} + 2 {T}_{OLED _ RESP}$

As shown in FIGS. 5C and 5D, equation (1) applies to both a 2D frame and a 3D frame, i.e., the maximum switching response time T_{SRS_MAX} represents the largest one of the response time for switching the SRS+ unit from the ON state to the OFF state and the response time for switching the SRS+ unit from the OFF state to the ON state.

In some embodiments, the switching response time for switching the switchable lenticular lenses from the OFF state to the ON state can be shortened by employing overdriving technique that rapidly switches the LC, such as delivering a voltage or a current to the electrodes of the switchable lenticular lens array to generate a vertically oriented electric field applied to the second material layer as illustrated in FIG. 4B, in order to satisfy the equation (1).

As described above, the switching response time for switching the switchable lenticular lens from the OFF state to the ON state can be shortened by employing overdrive technique that rapidly switches the LC. Owing to the response characteristics of the liquid crystal, the switching response time for switching the switchable lenticular lens from the OFF state to the ON state may be different from the switching response time for switching the switchable lenticular lens from the ON state to the OFF state, such that the duration of the switchable lenticular lens array being in the ON state is different from the duration being in the OFF state. Thus, in some embodiments (not shown), the duration that the array of OLED pixels is provided with 2D image content and the duration that the array of OLED pixels is provided with 3D/multiview image content may be set to be different, i.e., the lighting times of the array of OLED pixels in the 2D frame and in the 3D frame are different.

Furthermore, in some embodiments, the switching response time for switching the switchable lenticular lens from the ON state to the OFF state can be shortened by employing overdriving technique that rapidly switches the LC. In the embodiments illustrated in FIGS. 5B-5D, the term 'switchable lenticular lens array' may be used interchangeably with 'SRS+ unit'.

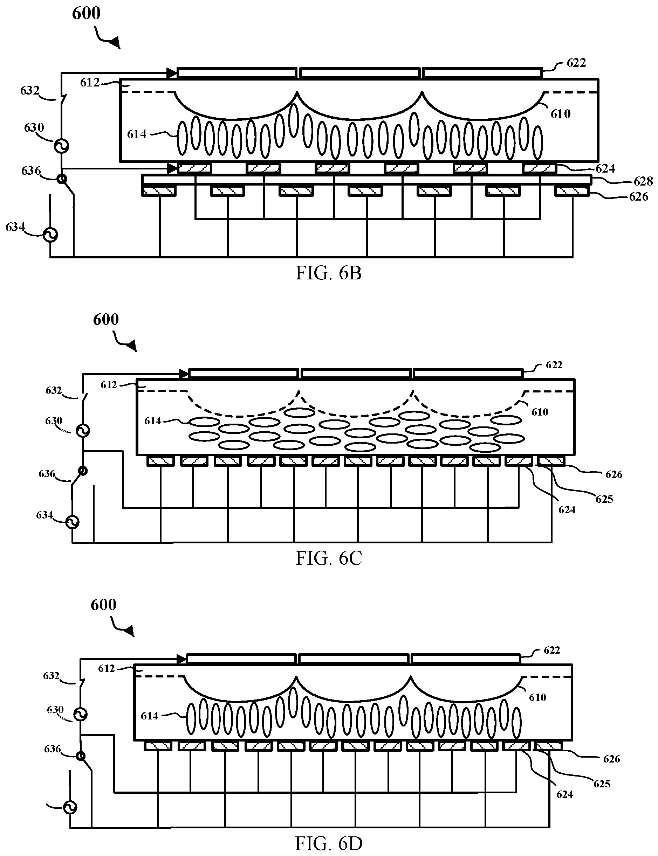

In order to shorten the switching response time for switching the switchable lenticular lens from the ON state to the OFF state, the present disclosure proposes a new structure of the switchable lenticular lens array. FIGS. 6A and 6B illustrate cross sectional views of a switchable lenticular lens array 600 in an OFF state and in an ON state, respectively, in an example, according to another embodiment consistent with the principles described herein. Similar to the switchable lenticular lens array 400 illustrated in FIGS. 4A and 4B, the switchable lenticular lens array 600 illustrated in FIGS. 6A and 6B comprises switchable lenticular lenses 610 that are switchable between the ON state and the OFF state (as indicated by the dashed line), a first material layer 612 having a fixed refractive index, and a second material layer 614 having an electrically controlled refractive index. On the contrary to the switchable lenticular lens array 400 illustrated in FIGS. 4A and 4B, the switchable lenticular lens array 600 illustrated in FIGS. 6A and 6B comprises an upper electrode 622 and lower electrodes 624, 626, where the lower electrodes 624, 626 comprise two layers of electrodes, the first layer of electrodes 624 and the second layer of electrodes 626 each including strip electrodes that are spaced apart from one another, the strip electrodes of the first layer of electrodes 624 being shorted to each other, the strip electrodes of the second layer of electrodes 626 being shorted to each other, the strip electrodes of the first layer of electrodes 624 and the strip electrodes of the second layer of electrodes 626 being interleaved with each other. In other embodiments, the electrodes in the first layer of electrodes 624 and the second layer of electrodes 626 may be electrodes of other shapes that are interleaved with one another. In the embodiment of FIGS. 6A and 6B, an insulating layer 628 is disposed between the first layer of electrodes 624 and the second layer of electrodes 626.

The switchable lenticular lens array 600 illustrated in FIGS. 6A and 6B further comprises a first power supply 630, a first switch 632, a second power supply 634 and a second switch 636, where the first switch 632 controls the loop of the first power supply 630 and the second switch 636 controls the loop of the second power supply 634, and the second switch 636 is a dual-contact switch. In other embodiments, the first power supply 630, the first switch 632, the second power supply 634 and the second switch 636 may not be included in the switchable lenticular lens array 600. In some embodiments, as shown in FIG. 6A, upon switching the switchable lenticular lens array 600 to the OFF state, the first switch 632 is opened and the second switch 636 is switched to a contact connected to the second power supply 634, the voltage and current of the first power supply 630 is not supplied between the upper electrode 622 and the lower electrodes 624, 626, and the voltage or current of the second power supply 634 is supplied between the first layer of electrodes 624 and the second layer of electrodes 626. Thus, a horizontal electric field is formed between the strip electrodes of the first layer of electrodes 624 and the strip electrodes of the second layer of electrodes 626, and forces the extension direction of the long axis of the material crystals in the second material layer 614 to turn to a horizontal direction, such that the refractive index of the second material layer 614 matches the fixed refractive index of the first material layer 612 to provide the OFF state. In some embodiments, as shown in FIG. 6B, upon switching the switchable lenticular lens array 600 to the ON state, the first switch 632 is closed and the second switch 636 is switched to another contact, the voltage and current of the second power supply 634 is not supplied between the first layer of electrodes 624 and the second layer of electrodes 626, the first layer electrodes 624 and the second layer electrodes 626 are shorted, the voltage or current of the first power supply 630 is supplied between the upper electrode 622 and the lower electrode (the first layer of electrodes 624 and the second layer of electrodes 626). Thus, a vertical electric field is formed between the upper electrode 622 and the lower electrodes 624, 626, and forces the extension direction of the long axis of the material crystals in the second material layer 614 to turn to the vertical direction, such that the refractive index of the second material layer 614 is different from the fixed refractive index of the first material layer 612 to provide the ON state. By way of example only and not limitation, the long axes of the material crystals of the second material layer 414 in FIG. 6B all extend in a vertical direction to indicate that the crystals have a refractive index different from the fixed refractive index. It should be understood by those skilled in the art that the long axis directions of the material crystals of the second material layer 614 being different from the horizontal direction may indicate that the refractive index of the second material layer 414 differs from the fixed refractive index of the first material layer 612, and the long axis directions of the crystals of the second material layer 614 in the respective zones may be adjusted to different directions according to various view directions so that the second material layer 614 has different refractive indices in the respective zones.

In other examples (not shown), the switchable lenticular lens array comprises an upper electrode and a lower electrode, where the upper electrode includes two layers of electrodes with an insulating layer disposed therebetween, the first layer of electrodes and the second layer of electrodes each includes strip electrodes that are spaced apart from one another, the strip electrodes of the first layer of electrodes are shorted to each other, the strip electrodes of the second layer of electrodes are shorted to each other, the strip electrodes of the first layer of electrodes and the strip electrodes of the second layer of electrodes are interleaved with each other. In some embodiments, the voltage of the first power supply is applied between the lower electrode and the first and second layers of electrodes of the upper electrode, generating an electric field in a vertical direction; a voltage of a second power supply is applied between the first layer of electrodes and the second layer of electrodes of the upper electrode, and an electric field in a horizontal direction is generated.

In other examples (not shown), the switchable lenticular lens array comprises an upper electrode and a lower electrode, where both the upper electrode and the lower electrode include two layers of electrodes with an insulating layer disposed therebetween, the first layer of electrodes and the second layer of electrodes each includes strip electrodes spaced apart from one another, the strip electrodes of the first layer of electrodes are interleaved with the strip electrodes of the second layer of electrodes, the strip electrodes of the first layer of electrodes of the upper electrodes are shorted to each other, the strip electrodes of the second layer of electrodes of the upper electrodes are shorted to each other, and the strip electrodes of the first layer of electrodes of the lower electrodes are shorted to each other, the strip electrodes of the second layer of electrodes of the lower electrodes are shorted to each other. In some embodiments, the voltage of the first power supply is applied between the first and second layers of electrodes of the upper electrode and the first and second layers of electrodes of the lower electrode, generating an electric field in a vertical direction; a voltage of the second power supply is applied between the first layer of electrodes and the second layer of electrodes of the upper electrode and/or between the first layer of electrodes and the second layer of electrodes of the lower electrode, and an electric field in a horizontal direction is generated.

In other examples (not shown), one of the two layers of electrodes provided with an insulating layer may cover the entire area of the switchable lenticular lens array and the other of the two layers of electrodes may comprise strip electrodes spaced apart from one another. In some embodiments (not shown), one of the two layers of electrodes that covers the entire area of the switchable lenticular lens array may comprise a hollow pattern. In some embodiments, the shape of the two layers of electrodes may be optimized as desired, the two layers of electrodes may be provided in any suitable shape that may produce the desired horizontal electric field.

FIGS. 6C and 6D illustrate cross sectional views of a switchable lenticular lens array 600 in an OFF state and in an ON state, respectively, in another example, according to another embodiment consistent with the principles described herein. The switchable lenticular lens array 600 illustrated in FIGS. 6C and 6D is substantially similar to the switchable lenticular lens array 600 illustrated in FIGS. 6A and 6B except that the lower electrodes 624, 626 of the switchable lenticular lens array 600 illustrated in FIGS. 6C and 6D include a first set of lower electrodes 624 and a second set of lower electrodes 626 arranged in the same layer, the first set of lower electrodes 624 and the second set of lower electrodes 626 each including strip electrodes that are spaced apart from one another, the strip electrodes of the first set of lower electrodes 624 being shorted to each other, the strip electrodes of the second set of lower electrodes 626 being shorted to each other, and the strip electrodes of the first set of lower electrodes 624 and the strip electrodes of the second set of lower electrodes 626 arranged to be interleaved with each other, i.e., interlaced with each other. In other embodiments, the electrodes in the first set of lower electrodes 624 and the second set of lower electrodes 626 may be electrodes of other shapes interleaved with each other. In the embodiment of FIGS. 6C and 6D, a gap 625 is provided between the first set of lower electrodes 624 and the second set of lower electrodes 626. In some embodiments, the gap 625 may be between 0.1 µm and 100 µm, and in other embodiments, the gap 625 may be other suitable values.

In some embodiments, as shown in FIG. 6C and similar to FIG. 6A, upon switching the switchable lenticular lens array 600 to the OFF state, the first switch 632 is opened and the second switch 636 is switched to a contact connected to the second power supply 634, the voltage and current of the first power supply 630 is not supplied between the upper electrode 622 and the lower electrodes 624, 626, and the voltage or current of the second power supply 634 is supplied between the first set of lower electrodes 624 and the second set of lower electrodes 626. Thus, a horizontal electric field is formed between the strip electrodes of the first set of lower electrodes 624 and the strip electrodes of the second set of lower electrodes 626 and forces the extension direction of the long axis of the material crystals in the second material layer 614 to turn to a horizontal direction, such that the refractive index of the second material layer 614 matches the fixed refractive index of the first material layer 612 to provide the OFF state. In some embodiments, as shown in FIG. 6D and similar to FIG. 6B, upon switching the switchable lenticular lens array 600 to the ON state, the first switch 632 is closed and the second switch 636 is switched to another contact, the voltage and current of the second power supply 634 is not provided between the first set of lower electrodes 624 and the second set of lower electrodes 626, the first set of lower electrodes 624 and the second set of lower electrodes 626 are shorted, and the voltage or current of the first power supply 630 is provided between the upper electrode 622 and the lower electrode (the first set of lower electrodes 624 and the second set of lower electrodes 626). Thus, a vertical electric field is formed between the upper electrode 622 and the lower electrodes 624, 626 and forces the extension direction of the long axis of the material crystals in the second material layer 614 to turn to the vertical direction, such that the refractive index of the second material layer 614 is different from the fixed refractive index of the first material layer 612 to provide the ON state.

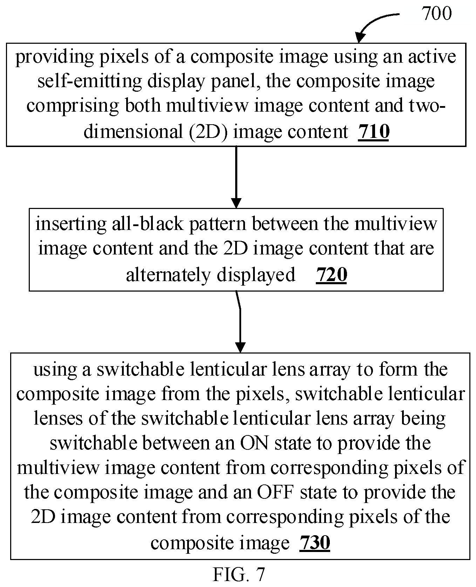

FIG. 7 illustrates a flowchart of a method 700 of operating a 2D/multiview switchable lenticular display in an example, according to an embodiment consistent with the principles described herein. As illustrated in FIG. 7, the method 700 of operating the 2D/multiview switchable lenticular display comprises providing pixels 710 of a composite image using an active self-emitting display panel, the composite image comprising both multiview image content and two-dimensional (2D) image content. In some embodiments, the active self-emitting display panel may be substantially similar to the display panel 102 of the time multiplexed multi-mode display 100 described above with reference to FIG. 2.

The method 700 of operating the 2D/multiview switchable lenticular display shown in FIG. 7 further comprises controlling the active self-emitting display panel to insert all-black pattern between the multiview image content and the 2D image content that are alternately displayed. In some embodiments, the active self-emitting display panel may be substantially similar to the display panel 102 of the time-multiplexed multi-mode display 100 described above with reference to FIG. 2. In some embodiments, the insertion of all-black pattern may substantially correspond to the process of refreshing the array of OLED pixels and state switching of the switchable lenticular lens array described with reference to FIGS. 5C and 5D.

The method 700 of operating the 2D/multiview switchable lenticular display shown in FIG. 7 further comprises using a switchable lenticular lens array to form a composite image 720 from the pixels, switchable lenticular lenses of the switchable lenticular lens array being switchable between an ON state to provide multiview image content from corresponding pixels of the composite image and an OFF state to provide 2D image content from corresponding pixels of the composite image. In some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D.

According to some embodiments, a corresponding row of the switchable lenticular lens array is in the ON state when each row of the active self-emitting display panel is provided with the multiview image content, and a corresponding row of the switchable lenticular lens array is in the OFF state when each row of the active self-emitting display panel is provided with the 2D image content. In addition, according to some embodiments, the number of rows of the active self-emitting display panel is equal to the number of rows of the switchable lenticular lens array, and a gate scanning time of the active self-emitting display panel is equal to a gate scanning time of the switchable lenticular lens array. Such an arrangement may enable optimal matching of changes in the image data with changes in the SRS+ unit. In some embodiments, the active self-emitting display panel may be substantially similar to the display panel 102 of the time-multiplexed multi-mode display 100 described above with reference to FIG. 2. Furthermore, in some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D.

According to some embodiments, the method 700 of operating the 2D/multiview switchable lenticular display further includes synchronously scanning the switchable lenticular lens array line-by-line to switch to the ON state while the active self-emitting display panel is scanned line-by-line to refresh from providing the 2D image content to providing the all-black pattern; and synchronously scanning the switchable lenticular lens array line-by-line to switch to the OFF state while the active self-emitting display panel is scanned line-by-line to refresh from providing the multiview image content to providing the all-black pattern. According to some embodiments, the method 700 of operating the 2D/multiview switchable lenticular display further includes refreshing an image content of the corresponding row of the active self-emitting display panel from the all-black pattern to the multiview image content or the 2D image content when state switching is accomplished for each row of the switchable lenticular lens array. In some embodiments, the active self-emitting display panel may be substantially similar to the display panel 102 of the time-multiplexed multi-mode display 100 described above with reference to FIG. 2. Furthermore, in some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, refreshing image content of the active self-emitting display panel and state switching of the switchable lenticular lens array may be substantially similar to the process of refreshing the array of OLED pixels and state switching of the switchable lenticular lens array described above with reference to FIGS. 5C and 5D.

According to some embodiments, a maximum response time of the switchable lenticular lens array is less than or equal to a sum of a display time of the all-black pattern and twice of a LED response time of the active self-emitting display panel. In some embodiments, the maximum response time of the switchable lenticular lens array, the display time of the all-black pattern, and the LED response time of the active self-emitting display panel may be substantially similar to respective ones of the maximum switching response time T_{SRS_MAX}, the display time T_{BLK} of the all-black pattern, and the OLED response time T_{OLED_RESP} of the SRS+ unit described with reference to FIGS. 5C and 5D.

According to some embodiments, a duration of the all-black pattern is equal to a duration of the 2D image content and a duration of the multiview image content. According to other embodiments, the duration of the all-black pattern is not equal to the duration of the 2D image content and the duration of the multiview image content. In some embodiments, the duration of the all-black pattern, the duration of the 2D image content, and the duration of the multiview image content may be substantially similar to respective ones of the display time T_{BLK} of the all-black pattern, the duration of the 2D image content, and the duration of the multiview image content described with reference to FIGS. 5C and 5D.

According to some embodiments, the method 700 of operating the 2D/multiview switchable lenticular display further includes reducing the duration of the all-black pattern by increasing a driving rate of the active self-emitting display panel and reducing a response time of the switchable lenticular lens array, such that the duration of the 2D image content and the duration of the multiview image content are increased to meet brightness requirements of the 2D/multiview switchable lenticular display. According to some embodiments, the method 700 of operating the 2D/multiview switchable lenticular display further includes increasing a driving rate of the active self-emitting display panel and reducing the duration of the 2D image content, such that a response time of the switchable lenticular lens array that switches from the OFF state to the ON state is less than or equal to a sum of a display time of the all-black pattern and twice of a LED response time of the active self-emitting display panel; and increasing the driving rate of the active self-emitting display panel and reducing the duration of the multiview image content, such that the response time of the switchable lenticular lens array that switches from the ON state to the OFF state is less than or equal to the sum of the display time of the all-black pattern and twice of the LED response time of the active self-emitting display panel. In some embodiments, the active self-emitting display panel may be substantially similar to the display panel 102 of the time-multiplexed multi-mode display 100 described above with reference to FIG. 2. Furthermore, in some embodiments, the switchable lenticular lens array may be substantially similar to the switchable lenticular lens array 108 described above with reference to FIG. 2, the switchable lenticular lens array 400 described with reference to FIGS. 4A-4B, and the switchable lenticular lens array 600 described with reference to FIGS. 6A-6D. In some embodiments, the response time of the switchable lenticular lens array may be substantially similar to the maximum switching response time T_{SRS_MAX} of the SRS+ unit described above with reference to FIGS. 5C and 5D. Furthermore, in some embodiments, the duration of the all-black pattern and the display time of the all-black pattern may be substantially similar to the display time T_{BLK} of the all-black pattern described with reference to FIGS. 5C and 5D. In some embodiments, the duration of the 2D image content, the duration of the multiview image content, and the LED response time of the active self-emitting display panel may be substantially similar to respective ones of the duration of the 2D image content, the duration of the multiview image content, and the OLED response time T_{OLED_RESP} described with reference to FIGS. 5C and 5D.

In some embodiments, the switchable lenticular lens array comprises: a first material layer having a fixed refractive index and comprising fixed lenses of the switchable lenticular lens array; a second material layer having an electrically controlled refractive index, the second material layer contacting the first material layer and filling in the shapes of the fixed lenses of the switchable lenticular lens array; and electrodes comprising an upper electrode and a lower electrode, the first material layer and the second material layer being disposed between the upper electrode and the lower electrode; wherein switching a switchable lenticular lens of the switchable lenticular lens array to the ON state comprises applying a first electrical potential between the electrodes to make the second material layer in an electric field in a first direction, so as to control the electrically controlled refractive index of the second material layer to have a refractive index different from the fixed refractive index; and wherein switching a switchable lenticular lens of the switchable lenticular lens array to the OFF state comprises removing the first electrical potential applied between the electrodes to remove the electric field in the first direction, so as to control the electrically controlled refractive index of the second material layer to have a refractive index that matches the fixed refractive index.

In some embodiments, switching the switchable lenticular lens of the switchable lenticular lens array to the OFF state comprises applying a second electrical potential between the electrodes to make the second material layer in an electric field in a second direction, so as to control the electrically controlled refractive index of the second material layer to have the refractive index that matches the fixed refractive index, wherein the first direction is orthogonal to the second direction.

In some embodiments, one of the upper electrode and the lower electrode covers an entire area of the switchable lenticular lens array, and the other of the upper electrode and the lower electrode comprises a first set of electrodes and a second set of electrodes interleaved across the entire area of the switchable lenticular lens array, wherein the second electrical potential is applied between the first set of electrodes and the second set of electrodes.

In some embodiments, the upper electrode and the lower electrode each comprises a first set of electrodes and a second set of electrodes interleaved across an entire area of the switchable lenticular lens array, wherein the second electrical potential is applied between the first set of electrodes and the second set of electrodes of the upper electrode and/or between the first set of electrodes and the second set of electrodes of the lower electrode.

In some embodiments, the first set of electrodes and the second set of electrodes each comprise strip electrodes that are spaced apart from one another, the strip electrodes of the first set of electrodes and the strip electrodes of the second set of electrodes interleaved with each other across the entire area of the switchable lenticular lens array.

In some embodiments, the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

In some embodiments, one of the first layer of electrodes and the second layer of electrodes that covers the entire area of the switchable lenticular lens array has a hollow pattern.

In some embodiments, the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

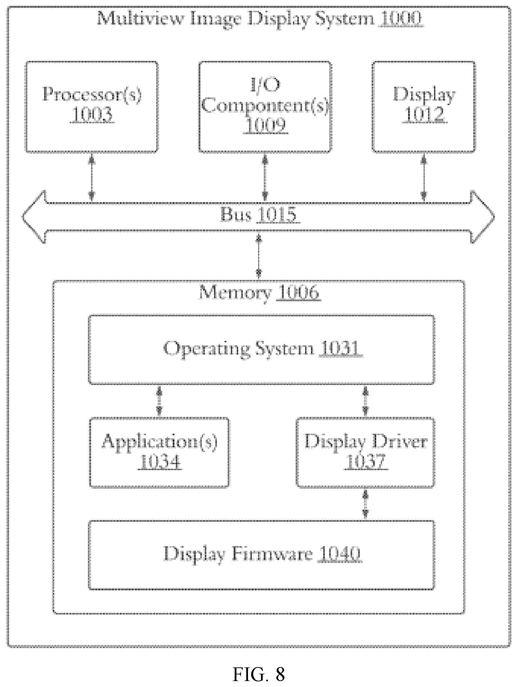

FIG. 8 is a schematic block diagram that depicts an example illustration of a 2D/multiview switchable lenticular display system 1000 (e.g., a computing device that displays multiview images) providing a 2D/multiview display according to various embodiments. The 2D/multiview switchable lenticular display system 1000 may be used to implement various methods such as, for example a method of operating a 2D/multiview switchable lenticular display. The 2D/multiview switchable lenticular display system 1000 may be a processor and memory-based system, where the memory stores a plurality of instructions, which, when executed by the processor, cause the processor to perform various operations. The operations may cause the processor to refresh the array of OLED pixels according to 2D image content during a 2D mode and refresh the array of OLED pixels according to multiview image content during a multiview mode. The processor may transmit the 2D image content and the multiview image content to a 2D/multiview switchable lenticular display configured to display a composite image by rendering the multiview image content in a multiview display mode and rendering the planar image content in a 2D display mode.

The 2D/multiview switchable lenticular display system 1000 may include a system of components that carry out various computing operations for a user of the 2D/multiview switchable lenticular display system 1000. The 2D/multiview switchable lenticular display system 1000 may be a laptop, tablet, smart phone, touch screen system, intelligent display system, or other client device. The 2D/multiview switchable lenticular display system 1000 may include various components such as, for example, a processor(s) 1003, a memory 1006, input/output (I/O) component(s) 1009, a display 1012, and potentially other components. These components may couple to a bus 1015 that serves as a local interface to allow the components of the 2D/multiview switchable lenticular display system 1000 to communicate with each other. While the components of the 2D/multiview switchable lenticular display system 1000 are shown as being contained within the 2D/multiview switchable lenticular display system 1000, it should be appreciated that at least some of the components may couple to the 2D/multiview switchable lenticular display system 1000 through an external connection. For example, components may externally plug into or otherwise connect with the 2D/multiview switchable lenticular display system 1000 via external ports, sockets, plugs, or connectors.

A processor 1003 may be a central processing unit (CPU), graphics processing unit (GPU), or any other integrated circuit that performs computing processing operations. The processor(s) 1003 may include one or more processing cores. The processor(s) 1003 comprises circuitry that executes instructions. Instructions include, for example, computer code, programs, logic, or other machine-readable instructions that are received and executed by the processor(s) 1003 to carry out computing functionality that are embodied in the instructions. The processor(s) 1003 may execute instructions to operate on data. For example, the processor(s) 1003 may receive input data (e.g., an image), process the input data according to an instruction set, and generate output data (e.g., a processed image). As another example, the processor(s) 1003 may receive instructions and generate new instructions for subsequent execution.

The memory 1006 may include one or more memory components. The memory 1006 is defined herein as including either or both of volatile and nonvolatile memory. Volatile memory components are those that do not retain information upon loss of power. Volatile memory may include, for example, random access memory (RAM), static random access memory (SRAM), dynamic random access memory (DRAM), magnetic random access memory (MRAM), or other volatile memory structures. System memory (e.g., main memory, cache, etc.) may be implemented using volatile memory. System memory refers to fast memory that may temporarily store data or instructions for quick read and write access to assist the processor(s) 1003.

Nonvolatile memory components are those that retain information upon a loss of power. Nonvolatile memory includes read-only memory (ROM), hard disk drives, solid-state drives, USB flash drives, memory cards accessed via a memory card reader, floppy disks accessed via an associated floppy disk drive, optical discs accessed via an optical disc drive, magnetic tapes accessed via an appropriate tape drive. The ROM may comprise, for example, a programmable read-only memory (PROM), an erasable programmable read-only memory (EPROM), an electrically erasable programmable read only memory (EEPROM), or other like memory device. Storage memory may be implemented using nonvolatile memory to provide long term retention of data and instructions.

The memory 1006 may refer to the combination of volatile and nonvolatile memory used to store instructions as well as data. For example, data and instructions may be stored in nonvolatile memory and loaded into volatile memory for processing by the processor(s) 1003. The execution of instructions may include, for example, a compiled program that is translated into machine code in a format that can be loaded from nonvolatile memory into volatile memory and then run by the processor 1003, source code that is converted in suitable format such as object code that is capable of being loaded into volatile memory for execution by the processor 1003, or source code that is interpreted by another executable program to generate instructions in volatile memory and executed by the processor 1003, etc. Instructions may be stored or loaded in any portion or component of the memory 1006 including, for example, RAM, ROM, system memory, storage, or any combination thereof.

While the memory 1006 is illustrated as being separate from other components of the 2D/multiview switchable lenticular display system 1000, it should be appreciated that the memory 1006 may be embedded or otherwise integrated, at least partially, into one or more components. For example, the processor(s) 1003 may include onboard memory registers or cache to perform processing operations.

I/O component(s) 1009 include, for example, touch screens, speakers, microphones, buttons, switches, dials, camera, sensors, accelerometers, or other components that receive user input or generate output directed to the user. I/O component (s) 1009 may receive user input and convert it into data for storage in the memory 1006 or for processing by the processor(s) 1003. I/O component(s) 1009 may receive data outputted by the memory 1006 or processor (s) 1003 and convert them into a format that is perceived by the user (e.g., sound, tactile responses, visual information, etc.).

Aspecific type of I/O component 1009 is a display 1012.The display 1012 may be a 2D/multiview switchable lenticular display, such as, for example, the 2D/multiview switchable lenticular display 100 illustrated in FIG. 2. A capacitive touch screen layer serving as an I/O component 1009 may be layered within the display to allow a user to provide input while contemporaneously perceiving visual output. The processor(s) 1003 may generate data that is formatted as an image for presentation on the display 1012. The processor(s) 1003 may execute instructions to render the image on the display for perception by the user.

The bus 1015 facilitates communication of instructions and data between the processor(s) 1003, the memory 1006, the I/O component(s) 1009, the display 1012, and any other components of the multiview image display system 1000. The bus 1015 may include address translators, address decoders, fabric, conductive traces, conductive wires, ports, plugs, sockets, and other connectors to allow for the communication of data and instructions.

The instructions within the memory 1006 may be embodied in various forms in a manner that implements at least a portion of the software stack. For example, the instructions may be embodied as an operating system 1031, an application(s) 1034, a device driver (e.g., a display driver 1037), firmware (e.g., display firmware 1040), or other software components. The operating system 1031 is a software platform that supports the basic functions of the 2D/multiview switchable lenticular display system 1000, such as scheduling tasks, controlling I/O components 1009, providing access to hardware resources, managing power, and supporting applications 1034.

An application(s) 1034 executes on the operating system 1031 and may gain access to hardware resources of the 2D/multiview switchable lenticular display system 1000 via the operating system 1031. In this respect, the execution of the application(s) 1034 is controlled, at least in part, by the operating system 1031. The application(s) 1034 may be a user-level software program that provides high-level functions, services, and other functionality to the user. In some embodiments, an application 1034 may be a dedicated 'app' downloadable or otherwise accessible to the user on the 2D/multiview switchable lenticular display system 1000. The user may launch the application(s) 1034 via a user interface provided by the operating system 1031. The application(s) 1034 may be developed by developers and defined in various source code formats. The applications 1034 may be developed using a number of programming or scripting languages such as, for example, C, C++, C#, Objective C, Swift, Perl, PHP, Visual Ruby, Go, or other programming languages. The application(s) 1034 may be compiled by a compiler into object code or interpreted by an interpreter for execution by the processor(s) 1003.

Device drivers such as, for example, the display driver 1037, include instructions that allow the operating system 1031 to communicate with various I/O components 1009. Each I/O component 1009 may have its own device driver. Device drivers may be installed such that they are stored in storage and loaded into system memory. For example, upon installation, a display driver 1037 translates a high-level display instruction received from the operating system 1031 into lower level instructions implemented by the display 1012 to display an image. The display driver 1037 may process instructions to select a 2D mode, a multiview mode, both modes, or neither modes. Application(s) 1034 that generate, create, or otherwise manage images for display may perform function calls or transmit instructions to the device driver 1037 to cause the image to be rendered and displayed to a user.

Firmware, such as, for example, display firmware 1040, may include machine code or assembly code that allows an I/O component 1009 or display 1012 to perform low-level operations. The display firmware 1040 may convert electrical signals of particular component into higher level instructions or data. For example, display firmware 1040 may control how a display 1012 activates individual pixels at a low level by adjusting voltage or current signals. Firmware may be stored in nonvolatile memory and executed directly from nonvolatile memory. For example, the display firmware 1040 may be embodied in a ROM chip coupled to the display 1012 such that the ROM chip is separate from other storage and system memory of the 2D/multiview switchable lenticular display system 1000. The display 1012 may include processing circuitry for executing the display firmware 1040.

The operating system 1031, application(s) 1034, drivers (e.g., display driver 1037), firmware (e.g., display firmware 1040), and potentially other instruction sets may each comprise instructions that are executable by the processor(s) 1003 or other processing circuitry of the 2D/multiview switchable lenticular display system 1000 to carry out the functionality and operations discussed above. Although the instructions described herein may be embodied in software or code executed by the processor(s) 1003 as discussed above, as an alternative, the instructions may also be embodied in dedicated hardware or a combination of software and dedicated hardware. For example, the functionality and operations carried out by the instructions discussed above may be implemented as a circuit or state machine that employs any one of or a combination of a number of technologies. These technologies may include, but are not limited to, discrete logic circuits having logic gates for implementing various logic functions upon an application of one or more data signals, application specific integrated circuits (ASICs) having appropriate logic gates, field-programmable gate arrays (FPGAs), specialized integrated circuits, or other components, etc.

In some embodiments, the instructions that carry out the functionality and operations discussed above may be embodied in a non-transitory, computer-readable storage medium. The computer-readable storage medium may or may not be part of the 2D/multiview switchable lenticular display system 1000. The instructions may include, for example, statements, code, or declarations that can be fetched from the computer-readable medium and executed by processing circuitry (e.g., the processor(s) 1003). In context, a 'computer-readable medium' may be any medium that can contain, store, or maintain the instructions described herein for use by or in connection with an instruction execution system, such as, for example, the 2D/multiview switchable lenticular display system 1000.

The non-transitory computer-readable medium can comprise any one of many physical media such as, for example, magnetic, optical, or semiconductor media. More specific examples of a suitable computer-readable medium may include, but are not limited to, magnetic tapes, magnetic floppy diskettes, magnetic hard drives, memory cards, solid-state drives, USB flash drives, or optical discs. Also, the computer-readable medium may be a random access memory (RAM) including, for example, static random access memory (SRAM) and dynamic random access memory (DRAM), or magnetic random access memory (MRAM). In addition, the computer-readable medium may be a read-only memory (ROM), a programmable read-only memory (PROM), an erasable programmable read-only memory (EPROM), an electrically erasable programmable read only memory (EEPROM), or other type of memory device.

The 2D/multiview switchable lenticular display system 1000 may perform any of the operations or implement the functionality described above. For example, the flowchart and process flows discussed above may be performed by the 2D/multiview switchable lenticular display system 1000 that executes instructions and processes data. While the 2D/multiview switchable lenticular display system 1000 is shown as a single device, embodiments are not so limited. In some embodiments, the 2D/multiview switchable lenticular display system 1000 may offload processing of instructions in a distributed manner such that multiple computing devices operate together to execute instructions that may be stored, loaded, or executed in a distributed arrangement. For example, at least some instructions or data may be stored, loaded, or executed in a cloud-based system that operates in conjunction with the 2D/multiview switchable lenticular display system 1000. In some embodiments, the instructions that implement the functionality described above may be included in an application 1034 that executes on the operating system 1031 or may be included as part of the functionality of the operating system.

Thus, there have been described examples and embodiments of a 2D/multiview switchable lenticular display and a method of operating a 2D/multiview switchable lenticular display that provide a pair of modes configured to operate in a time-multiplexed or time- interlaced manner. For example, embodiments are directed to processing a multiview image so that it displayed in two modes (e.g., a 2D mode and a multiview mode) of a 2D/multiview switchable lenticular display resulting in a composite multiview image. It should be understood that the above-described examples are merely illustrative of some of the many specific examples and embodiments that represent the principles described herein. Clearly, those skilled in the art can readily devise numerous other arrangements without departing from the scope as defined by the following claims.

## Claims

1. A method of operating a 2D/multiview switchable lenticular display, the method comprising:
providing pixels of a composite image using an active self-emitting display panel, the composite image comprising both multiview image content and two-dimensional (2D) image content, and inserting all-black pattern between the multiview image content and the 2D image content that are alternately displayed; and
using a switchable lenticular lens array to form the composite image from the pixels, switchable lenticular lenses of the switchable lenticular lens array being switchable between an ON state to provide the multiview image content from corresponding pixels of the composite image and an OFF state to provide the 2D image content from corresponding pixels of the composite image,
wherein a corresponding row of the switchable lenticular lens array is in the ON state when each row of the active self-emitting display panel is provided with the multiview image content, and a corresponding row of the switchable lenticular lens array is in the OFF state when each row of the active self-emitting display panel is provided with the 2D image content.

2. The method of claim 1, wherein the number of rows of the active self-emitting display panel is equal to the number of rows of the switchable lenticular lens array, and a gate scanning time of the active self-emitting display panel is equal to a gate scanning time of the switchable lenticular lens array.

3. The method of claim 1 or 2, wherein the method comprises:
synchronously scanning the switchable lenticular lens array line-by-line to switch to the ON state while the active self-emitting display panel is scanned line-by-line to refresh from providing the 2D image content to providing the all-black pattern; and
synchronously scanning the switchable lenticular lens array line-by-line to switch to the OFF state while the active self-emitting display panel is scanned line-by-line to refresh from providing the multiview image content to providing the all-black pattern.

4. The method of claim 1 or 2, wherein the method comprises:
refreshing an image content of the corresponding row of the active self-emitting display panel from the all-black pattern to the multiview image content or the 2D image content when state switching is accomplished for each row of the switchable lenticular lens array.

5. The method of claim 1 or 2, wherein a maximum response time of the switchable lenticular lens array is less than or equal to a sum of a display time of the all-black pattern and twice of a LED response time of the active self-emitting display panel.

6. The method of claim 1 or 2, wherein a duration of the all-black pattern is equal to a duration of the 2D image content and a duration of the multiview image content.

7. The method of claim 1 or 2, wherein a duration of the all-black pattern is not equal to a duration of the 2D image content and a duration of the multiview image content.

8. The method of claim 7, wherein the method comprises:
reducing the duration of the all-black pattern by increasing a driving rate of the active self-emitting display panel and reducing a response time of the switchable lenticular lens array, such that the duration of the 2D image content and the duration of the multiview image content are increased to meet brightness requirements of the 2D/multiview switchable lenticular display.

9. The method of claim 7, wherein the method comprises:
increasing a driving rate of the active self-emitting display panel and reducing the duration of the 2D image content, such that a response time of the switchable lenticular lens array that switches from the OFF state to the ON state is less than or equal to a sum of a display time of the all-black pattern and twice of a LED response time of the active self-emitting display panel; and
increasing the driving rate of the active self-emitting display panel and reducing the duration of the multiview image content, such that the response time of the switchable lenticular lens array that switches from the ON state to the OFF state is less than or equal to the sum of the display time of the all-black pattern and twice of the LED response time of the active self-emitting display panel.

10. The method of claim 1 or 2, wherein the switchable lenticular lens array comprises:
a first material layer having a fixed refractive index and comprising fixed lenses of the switchable lenticular lens array;
a second material layer having an electrically controlled refractive index, the second material layer contacting the first material layer and filling in shapes of the fixed lenses of the switchable lenticular lens array; and
electrodes comprising an upper electrode and a lower electrode, the first material layer and the second material layer being disposed between the upper electrode and the lower electrode;
wherein switching a switchable lenticular lens of the switchable lenticular lens array to the ON state comprises applying a first electrical potential between the electrodes to make the second material layer in an electric field in a first direction, so as to control the electrically controlled refractive index of the second material layer to have a refractive index different from the fixed refractive index; and
wherein switching a switchable lenticular lens of the switchable lenticular lens array to the OFF state comprises removing the first electrical potential applied between the electrodes to remove the electric field in the first direction, so as to control the electrically controlled refractive index of the second material layer to have a refractive index that matches the fixed refractive index.

11. The method of claim 10, wherein switching the switchable lenticular lens of the switchable lenticular lens array to the OFF state comprises applying a second electrical potential between the electrodes to make the second material layer in an electric field in a second direction, so as to control the electrically controlled refractive index of the second material layer to have the refractive index that matches the fixed refractive index, wherein the first direction is orthogonal to the second direction.

12. The method of claim 11, wherein one of the upper electrode and the lower electrode covers an entire area of the switchable lenticular lens array, and the other of the upper electrode and the lower electrode comprises a first set of electrodes and a second set of electrodes interleaved across the entire area of the switchable lenticular lens array, wherein the second electrical potential is applied between the first set of electrodes and the second set of electrodes.

13. The method of claim 11, wherein the upper electrode and the lower electrode each comprises a first set of electrodes and a second set of electrodes interleaved across an entire area of the switchable lenticular lens array, wherein the second electrical potential is applied between the first set of electrodes and the second set of electrodes of the upper electrode and/or between the first set of electrodes and the second set of electrodes of the lower electrode.

14. The method of claim 12 or 13, wherein the first set of electrodes and the second set of electrodes each comprise strip electrodes that are spaced apart from one another, the strip electrodes of the first set of electrodes and the strip electrodes of the second set of electrodes interleaved with each other across the entire area of the switchable lenticular lens array.

15. The method of claim 12 or 13, wherein the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

16. The method of claim 15, wherein one of the first layer of electrodes and the second layer of electrodes that covers the entire area of the switchable lenticular lens array has a hollow pattern.

17. The method of claim 12 or 13, wherein the first set of electrodes and the second set of electrodes are arranged in the same layer, the electrodes in the first set of electrodes and the electrodes in the second set of electrodes are interleaved with each other, and a gap is provided between electrodes in the first set of electrodes and adjacent electrodes in the second set of electrodes.

18. A 2D/multiview switchable lenticular display, comprising:
an active self-emitting display panel configured to provide pixels of a composite image comprising both multiview image content and two-dimensional (2D) image content, and to insert all-black pattern between the multiview image content and the 2D image content that are alternately displayed;
a switchable lenticular lens array configured to form the composite image from the pixels, wherein the switchable lenticular lens array having switchable lenticular lenses that switch between an ON state to provide the multiview image content from corresponding pixels of the composite image and an OFF state to provide the 2D image content from corresponding pixels of the composite image; and
a controller configured to control a corresponding row of the switchable lenticular lens array to be in the ON state when each row of the active self-emitting display panel is provided with the multiview image content, and to control a corresponding row of the switchable lenticular lens array to be in the OFF state when each row of the active self-emitting display panel is provided with the 2D image content.

19. The 2D/multiview switchable lenticular display of claim 18, wherein the number of rows from the active self-emitting display panel is equal to the number of rows of the switchable lenticular lens array, and a gate scanning time of the active self-emitting display panel is equal to a gate scanning time of the switchable lenticular lens array.

20. The 2D/multiview switchable lenticular display of claim 18 or 19, wherein the controller is configured to:
synchronously scan the switchable lenticular lens array line-by-line to switch to the ON state while the active self-emitting display panel is scanned line-by-line to refresh from providing the 2D image content to providing the all-black pattern; and
synchronously scan the switchable lenticular lens array line-by-line to switch to the OFF state while the active self-emitting display panel is scanned line-by-line to refresh from providing the multiview image content to providing the all-black pattern.

21. The 2D/multiview switchable lenticular display of claim 18 or 19, wherein the controller is configured to refresh an image content of the corresponding row of the active self-emitting display panel from the all-black pattern to the multiview image content or the 2D image content when state switching is accomplished for each row of the switchable lenticular lens array.

22. The 2D/multiview switchable lenticular display of claim 18 or 19, wherein a maximum response time of the switchable lenticular lens array is less than or equal to a sum of a display time of the all-black pattern and twice of a LED response time of the active self-emitting display panel.

23. The 2D/multiview switchable lenticular display of claim 18 or 19, wherein the controller is configured to make a duration of the all-black pattern is equal to a duration of the 2D image content and a duration of the multiview image content.

24. The 2D/multiview switchable lenticular display according to claim 18 or 19, wherein the controller is configured to make a duration of the all-black pattern is not equal to a duration of the 2D image content and a duration of the multiview image content.

25. The 2D/multiview switchable lenticular display of claim 24, wherein the controller is configured to reduce the duration of the all-black pattern by increasing a driving rate of the active self-emitting display panel and reducing a response time of the switchable lenticular lens array, such that the duration of the 2D image content and the duration of the multiview image content are increased to meet brightness requirements of the 2D/multiview switchable lenticular display.

26. The 2D/multiview switchable lenticular display of claim 24, wherein the controller is configured to:
increase a driving rate of the active self-emitting display panel and reduce the duration of the 2D image content, such that a response time of the switchable lenticular lens array that switches from the OFF state to the ON state is less than or equal to a sum of a display time of the all-black pattern and twice of a LED response time of the active self-emitting display panel by; and
increase the driving rate of the active self-emitting display panel and reduce the duration of the multiview image content, such that the response time of the switchable lenticular lens array that switches from the ON state to the OFF state is less than or equal to the sum of the display time of the all-black pattern and twice of the LED response time of the active self-emitting display panel.

27. The 2D/multiview switchable lenticular display of claim 18 or 19, wherein the switchable lenticular lens array comprises:
a first material layer having a fixed refractive index and comprising fixed lenses of the switchable lenticular lens array;
a second material layer having an electrically controlled refractive index, the second material layer contacting the first material layer and filling in shapes of the fixed lenses of the switchable lenticular lens array;
electrodes configured to deliver a voltage or a current to switch the state of switchable lenticular lenses of the switchable lenticular lens array, wherein the electrodes include an upper electrode and a lower electrode, the first material layer and the second material layer being disposed between the upper electrode and the lower electrode; and
a lens controller configured to:
apply a first electrical potential between the electrodes to make the second material layer in an electric field in a first direction, so as to control the electrically controlled refractive index of the second material layer to have a refractive index different from the fixed refractive index to provide the ON state; and
remove the first electric potential applied between the electrodes to remove the electric field in the first direction, so as to control the electrically controlled refractive index of the second material layer to have a refractive index that matches the fixed refractive index to provide the OFF state.

28. The 2D/multiview switchable lenticular display of claim 27, wherein the lens controller is configured to apply a second electrical potential between the electrodes to make the second material layer in an electric field in a second direction, so as to control the electrically controlled refractive index of the second material layer to have the refractive index that matches the fixed refractive index to provide the OFF state, wherein the first direction is orthogonal to the second direction.

29. The 2D/multiview switchable lenticular display of claim 28, wherein one of the upper electrode and the lower electrode covers an entire area of the switchable lenticular lens array, and the other of the upper electrode and the lower electrode comprises a first set of electrodes and a second set of electrodes interleaved across an entire area of the switchable lenticular lens array, wherein the second electrical potential is applied between the first set of electrodes and the second set of electrodes.

30. The 2D/multiview switchable lenticular display of claim 28, wherein the upper electrode and the lower electrode each comprises a first set of electrodes and a second set of electrodes interleaved across an entire area of the switchable lenticular lens array, wherein the second electrical potential is applied between the first set of electrodes and the second set of electrodes of the upper electrode and/or between the first set of electrodes and the second set of electrodes of the lower electrode.

31. The 2D/multiview switchable lenticular display according to claim 29 or 30, wherein the first set of electrodes and the second set of electrodes each comprise strip electrodes that are spaced apart from one another, the strip electrodes of the first set of electrodes and the strip electrodes of the second set of electrodes being interleaved with each other across the entire area of the switchable lenticular lens array.

32. The 2D/multiview switchable lenticular display according to claim 29 or 30, wherein the first set of electrodes is arranged as a first layer of electrodes and the second set of electrodes is arranged as a second layer of electrodes, wherein one of the first layer of electrodes and the second layer of electrodes covers the entire area of the switchable lenticular lens array, and the other of the first layer of electrodes and the second layer of electrodes comprises strip electrodes spaced apart from one another.

33. The 2D/multiview switchable lenticular display of claim 32, wherein one of the first layer of electrodes and the second layer of electrodes that covers the entire area of the switchable lenticular lens array has a hollow pattern.

34. The 2D/multiview switchable lenticular display according to claim 29 or 30, wherein the first set of electrodes and the second set of electrodes are arranged in the same layer, the electrodes in the first set of electrodes and the electrodes in the second set of electrodes are interleaved with each other, and a gap is provided between the electrodes in the first set of electrodes and adjacent electrodes in the second set of electrodes.

35. A 2D/multiview switchable lenticular display system, the system comprising:
a processor; and
a memory that stores instructions which, when executed by the processor, cause the processor to perform the method of any one of claims 1 to 17.
